# EUROPÄISCHE PATENTSCHRIFT

(11) **EP 3 320 195 B1**
(45) Veröffentlichungstag und Bekanntmachung des Hinweises auf die Patenterteilung: **07.08.2019**
(21) Anmeldenummer: 16733303.8
(22) Anmeldetag: 28.06.2016
(51) Int. Cl.: F01N 3/20, F01N 11/00

(54) **VERFAHREN ZUM BETREIBEN EINES ABGASNACHBEHANDLUNGSSYSTEMS MIT EINEM SCR-KATALYSATOR**
METHOD FOR OPERATING AN EXHAUST GAS AFTERTREATMENT SYSTEM COMPRISING A SELECTIVE CATALYTIC REDUCTION CATALYST
PROCÉDÉ POUR FAIRE FONCTIONNER UN SYSTÈME DE POST-TRAITEMENT DES GAZ D'ÉCHAPPEMENT COMPORTANT UN CATALYSEUR À RÉDUCTION CATALYTIQUE SÉLECTIVE

(30) Priorität: 07.07.2015 DE 102015212700
(43) Veröffentlichungstag der Anmeldung: 16.05.2018
(73) Patentinhaber: MTU Friedrichshafen GmbH, 88045 Friedrichshafen (DE)
(72) Erfinder: NIEMEYER, Jens, 88045 Friedrichshafen (DE); SPÄDER, Tim, 88085 Langenargen (DE)
(74) Vertreter: Kordel, Mattias
(86) Internationale Anmeldenummer: PCT/EP2016/001094
(87) Internationale Veröffentlichungsnummer: WO 2017/005348

(56) Entgegenhaltungen:
- WO-A1-2015/082805
- DE-A1-102006 007 122
- DE-A1-102008 008 618
- DE-A1-102013 205 583
- DE-B3-102011 011 441

## Beschreibung

Die Erfindung betrifft ein Verfahren zum Betreiben eines Systems mit einer Brennkraftmaschine und einem Abgasnachbehandlungssystem, eine Steuereinrichtung für ein solches System, ein Abgasnachbehandlungssystem, und eine Brennkraftmaschine.

Verfahren zum Betreiben eines Systems mit einer Brennkraftmaschine und einem Abgasnachbehandlungssystem mit einem SCR-Katalysator sind aus den Druckschriften WO 2015/082805 A1, DE 10 2008 008618 A1, DE 10 2006 007122 A1, DE 10 2013 205583 A1 und DE 10 2011 011441 B3 bekannt. Die Druckschrift DE 10 2006 007122 A1 betrifft ein Verfahren zum Betreiben eines Verbrennungsmotors, insbesondere eines Kraftfahrzeugs, und einer an den Verbrennungsmotor angeschlossenen Abgasnachbehandlungseinrichtung, wobei der Verbrennungsmotor ein Abgas mit einem einstellbaren NOx- und Partikelrohemissionswert erzeugt und die Abgasnachbehandlungseinrichtung den NOx-Gehalt des Abgases auf einen NOx-Endrohemissionswert vermindert. Dabei werden für einen vorgebbaren NOx-Rohemissionszielwert zugehörige Kombinationen von Motorbetriebsgrössen ermittelt. Weiterhin werden Betriebsgrößen des Verbrennungsmotors im Sinne einer Verminderung des NOx-Rohemissionswerts verändert.

Abgasnachbehandlungssysteme mit wenigstens einem Katalysator zur selektiven katalytischen Reduktion von Stickoxiden (SCR-Katalysator) werden verwendet, um Stickoxidemissionen auf gesetzlich vorgeschriebene Werte zu reduzieren. Über eine Laufzeit des Abgasnachbehandlungssystems ist es möglich, dass die Umsatzrate, welche ein solcher SCR-Katalysator erreichen kann, abnimmt. Eine übliche Auslegung eines Systems, welches eine Brennkraftmaschine und ein solches Abgasnachbehandlungssystem mit einem SCR-Katalysator umfasst, berücksichtigt diese Abnahme der Leistungsfähigkeit des SCR-Katalysators durch eine Auslegungsreserve. Diese wird auch als Alterungsreserve bezeichnet. Je nach bestimmtem Anwendungsfall kann die Alterungsreserve sehr groß ausfallen. Dies führt dazu, dass die Brennkraftmaschine im Neuzustand des Systems mit Rücksicht auf die zu erwartende Alterung mit Stickoxid-Rohemissionen betrieben wird, die deutlich unter dem Emissionsniveau liegen, welches eigentlich unter Einhaltung der gesetzlichen Grenzwerte durch den neuwertigen SCR-Katalysator unter Berücksichtigung der Alterungsreserve gefahren werden könnte. Diese tendenziell zu kleinen Stickoxid-Rohemissionen aufgrund der mangelnden Ausschöpfung des Potentials des neuwertigen SCR-Katalysators führen zu einem erhöhten Verbrauch der Brennkraftmaschine, was aus Kostengründen und auch unter Umweltgesichtspunkten ungünstig ist. Über eine Alterungserkennung ist es zwar grundsätzlich möglich, die Stickoxidemissionen auch im Fall einer Alterung des SCR-Katalysators im gesetzlich zulässigen Bereich zu halten, dies löst jedoch nicht das Problem eines in Hinblick auf die Leistungsfähigkeit und Umsatzrate eines neuen SCR-Katalysators zu Beginn von dessen Lebenszeit zu hohen Verbrauchs.

Der Erfindung liegt die Aufgabe zugrunde, ein Verfahren zum Betreiben eines Systems mit einer Brennkraftmaschine und einem Abgasnachbehandlungssystem mit einem SCR-Katalysator, eine Steuereinrichtung für ein solches System, ein Abgasnachbehandlungssystem und eine Brennkraftmaschine zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen und der Beschreibung.

Die Aufgabe wird insbesondere gelöst, indem ein Verfahren zum Betreiben eines Systems, welches eine Brennkraftmaschine und ein Abgasnachbehandlungssystem aufweist, wobei das Abgasnachbehandlungssystems seinerseits einen SCR-Katalysator aufweist, geschaffen wird, welches folgende Schritte aufweist: Die Brennkraftmaschine wird auf der Grundlage von mindestens einem eine Stickoxid-Rohemission beeinflussenden Prozessparameter angesteuert. Es wird eine Alterungserkennung für den SCR-Katalysator durchgeführt. Wird eine Alterung des SCR-Katalysators erkannt, wird in einer ersten Betriebsart der Brennkraftmaschine der mindestens eine Prozessparameter in Richtung einer verringerten Stickoxid-Rohemission verändert, und die Brennkraftmaschine wird auf der Grundlage des veränderten mindestens einen Prozessparameters angesteuert. Dadurch, dass der Prozessparameter abhängig von der Alterungserkennung in Richtung einer verringerten Stickoxid-Rohemission verändert wird, wobei die Brennkraftmaschine auf der Grundlage des veränderten Prozessparameters angesteuert und so zu einer niedrigeren Stickoxid-Rohemission veranlasst wird, ist es möglich, die Brennkraftmaschine zu Beginn der Lebenszeit des SCR-Katalysators, wenn dieser sich in einem neuwertigen Zustand mit hoher Umsatzrate befindet, mit einer vergleichsweise hohen Stickoxid-Rohemission zu betreiben, wobei diese bei einer auftretenden Alterung des SCR-Katalysators schrittweise heruntergefahren werden kann. Hierdurch ist es möglich, die Brennkraftmaschine zu Beginn der Lebensdauer des SCR-Katalysators unter Ausnutzung der hohen Stickoxid-Umsatzrate des neuwertigen SCR-Katalysators und insbesondere der Alterungsreserve in Hinblick auf einen möglichst niedrigen Brennstoffverbrauch zu optimieren, insbesondere verbrauchsarm abzustimmen. Es ist somit nicht länger notwendig, die Brennkraftmaschine von Beginn an ungünstig zu betreiben, nur weil zum Ende der Lebenszeit des SCR-Katalysators sinkende Umsatzraten desselben zu erwarten sind. Insgesamt können so zu Beginn der Lebenszeit der Brennkraftmaschine oder des SCR-Katalysators niedrige Verbrauchswerte erreicht werden, was aus Kostengründen und unter Umweltgesichtspunkten günstig ist.

Unter einem Abgasnachbehandlungssystem wird generell ein System verstanden, welches eingerichtet ist, um Abgas einer dem Abgasnachbehandlungssystem vorgeschalteten Einrichtung, insbesondere einer Maschine, insbesondere einer Brennkraftmaschine, nachzubehandeln, wobei durch die Nachbehandlung wenigstens eine Schadstoffkonzentration im Abgas reduziert wird.

Unter einem SCR-Katalysator wird insbesondere eine katalytische Einrichtung verstanden, die eingerichtet ist, um eine selektive katalytische Reduktion von Stickoxiden durchzuführen, wobei insbesondere an der katalytischen Einrichtung eine Umsetzung eines Reduktionsmittels mit dem Abgas erfolgt. Bevorzugt ist der SCR-Katalysator eingerichtet, um Stickoxide durch Umsetzung mit Ammoniak zu reduzieren.

Als die Stickoxid-Rohemissionen beeinflussender Prozessparameter wird im Rahmen des Verfahrens vorzugsweise ein Sollwert für die Stickoxid-Rohemissionen verwendet. Es ist möglich, dass dieser Sollwert betriebspunktabhängig, insbesondere abhängig von einem Betriebspunkt der Brennkraftmaschine, in einem Kennfeld hinterlegt ist. Der Sollwert wird vorzugsweise angepasst, insbesondere erniedrigt, vorzugsweise schrittweise oder inkrementell erniedrigt, wenn eine Alterung des SCR-Katalysators erkannt wird.

Der Sollwert für die Stickoxid-Rohemissionen geht vorzugsweise in eine Rohemissions-Regeleinrichtung ein, die bevorzugt als Stellgröße wenigstens einen Betriebsparameter der Brennkraftmaschine beeinflusst. Der wenigstens eine Betriebsparameter ist bevorzugt ausgewählt aus einer Gruppe bestehend aus einem Spritzbeginn, einem Ladedruck, einem Verbrennungsluft-Brennstoff-Verhältnis, das auch als Lambdawert bezeichnet wird, einem Brennstoff-Hochdruck in einem gemeinsamen Hochdruckspeicher für eine Mehrzahl von Injektoren, der auch als Raildruck bezeichnet wird, oder wenigstens einem weiteren geeigneten Betriebsparameter der Brennkraftmaschine. Die hier genannten Betriebsparameter sind in besonderer Weise geeignet, um die Stickoxid-Rohemissionen der Brennkraftmaschine zu beeinflussen.

Es ist bevorzugt ein erster Stickoxid-Sensor vorgesehen, welcher die Stickoxid-Rohemissionen stromabwärts der Brennkraftmaschine in einem Abgaspfad erfasst. Ein Messwert des ersten Stickoxid-Sensors geht vorzugsweise in die Regeleinrichtung für die Stickoxid-Rohemissionen ein und wird dort mit dem aktuellen Sollwert für die Stickoxid-Rohemissionen verrechnet, wobei der wenigstens eine Betriebsparameter als Stellgröße in Abhängigkeit von einer Soll/Ist-Abweichung der Stickoxid-Rohemissionen beeinflusst wird.

Unter einer Alterungserkennung wird allgemein ein Verfahren verstanden, mit dem eine Alterung und insbesondere eine sinkende Umsatzrate des SCR-Katalysators erfasst werden kann. Bei der Alterungserkennung kann es sich insbesondere um eine Durchbrucherkennung handeln, oder es ist möglich, dass die Alterungserkennung eine Durchbrucherkennung als Verfahrensschritt umfasst. Beispielsweise ist es möglich, dass im Rahmen der Alterungserkennung eine Durchbrucherkennung durchgeführt wird, wobei in Reaktion auf einen erkannten Durchbruch des SCR-Katalysators eine Adaption einer Emissionsregelung und insbesondere einer Ansteuerung einer Dosiereinrichtung für ein Reduktionsmittel in den Abgaspfad stromaufwärts des SCR-Katalysators erfolgt. Dabei ist es bevorzugt möglich, dass eine geänderte Umsatzrate oder eine veränderte Differenz-Stickoxid-Sollkonzentration stromabwärts des SCR-Katalysators ermittelt wird, wobei es weiterhin möglich ist, dass diese in einem Lernkennfeld hinterlegt werden.

Als Auslöser für eine Veränderung des mindestens einen Prozessparameters kann ein im Rahmen der Alterungserkennung erkannter Durchbruch des SCR-Katalysators verwendet werden. Alternativ oder zusätzlich ist es möglich, dass als Auslöser für eine Veränderung des mindestens einen Prozessparameters ein neuer oder geänderter Eintrag in dem Lernkennfeld der Alterungserkennung verwendet wird. Der Prozessparameter wird also besonders bevorzugt dann verändert, wenn im Rahmen der Alterungserkennung ein Durchbruch des SCR-Katalysators erkannt wird, und/oder wenn im Rahmen der Alterungserkennung das Lernkennfeld verändert wird, insbesondere in Richtung einer reduzierten Umsatzrate oder einer höheren Sollkonzentration von Stickoxiden stromabwärts des SCR-Katalysators. Ist im Rahmen der Alterungserkennung auch eine Veränderung des Lernkennfelds in Richtung einer niedrigeren Stickoxid-Sollkonzentration stromabwärts des SCR-Katalysators vorgesehen, beispielsweise um eine zu große Änderung in der anderen Richtung rückgängig zu machen, wird ein solches Ereignis vorzugsweise nicht als Auslöser für eine Veränderung des Prozessparameters verwendet, um die Stickoxid-Rohemissionen nicht unnötig zu reduzieren und damit den Verbrauch der Brennkraftmaschine unnötig zu erhöhen.

Dass der mindestens eine Prozessparameter in Richtung einer verringerten Stickoxid-Rohemission verändert wird, bedeutet insbesondere, dass der wenigstens eine Prozessparameter so verändert wird, dass bei Ansteuerung der Brennkraftmaschine auf der Grundlage des veränderten mindestens einen Prozessparameters diese eine niedrigere Stickoxid-Rohemission aufweist, als zuvor bei Ansteuerung auf der Grundlage des noch nicht veränderten mindestens einen Prozessparameters.

Unter einer Stickoxid-Rohemission ist hier insbesondere eine Stickoxid-Konzentration im Abgas der Brennkraftmaschine stromaufwärts des SCR-Katalysators und besonders bevorzugt stromaufwärts einer Dosiereinrichtung für ein Reduktionsmittel oder ein Reduktionsmittelvorläuferprodukt zu verstehen.

Unter einer Dosiereinrichtung zum Eindosieren eines Reduktionsmittels wird eine Einrichtung verstanden, mittels der ein Reduktionsmittel oder ein Reduktionsmittelvorläuferprodukt in das Abgasnachbehandlungssystem stromaufwärts des SCR-Katalysators eindosierbar ist. Dabei kann es sich beispielsweise um ein Ventil, einen Injektor und/oder eine Düse handeln.

Der Begriff "Reduktionsmittel" umfasst sowohl ein Reduktionsmittel im engeren Sinne, welches ohne weitere chemische Veränderung direkt an dem SCR-Katalysator mit Stickoxiden zu deren Reduktion umgesetzt werden kann, als auch Vorläuferprodukte für Reduktionsmittel, die zunächst mit dem Abgas zu dem eigentlichen Reduktionsmittel reagieren, wobei dieses dann an dem SCR-Katalysator mit den im Abgas enthaltenen Stickoxiden umgesetzt wird. Ein solches Reduktionsmittelvorläuferprodukt ist beispielsweise eine Hamstoff-Wasser-Lösung, die unter den im Abgasstrom herrschenden Bedingungen zu Ammoniak umgesetzt wird, wobei das Ammoniak dann als eigentliches Reduktionsmittel im engeren Sinne an dem SCR-Katalysator mit den Stickoxiden umgesetzt wird.

Bei einer bevorzugten Ausführungsform des Verfahrens wird eine Emissionsregelung in der ersten Betriebsart auf Grundlage einer konstanten Bestimmungsgröße für die Stickoxid-Konzentration stromabwärts des SCR-Katalysators durchgeführt. Dabei wird die Emissionsregelung insbesondere durch Ansteuerung der Dosiereinrichtung für das Reduktionsmittel und/oder das Reduktionsmittelvorläuferprodukt verwirklicht, wobei die Dosiereinrichtung abhängig von der Bestimmungsgröße, welche die Stickoxid-Konzentration stromabwärts des SCR-Katalysators bestimmt, erfolgt. Bei dieser Bestimmungsgröße handelt es sich vorzugsweise um eine Soll-Stickoxid-Konzentration stromabwärts des SCR-Katalysators. Vorzugsweise ist stromabwärts des SCR-Katalysators ein zweiter Stickoxid-Sensor vorgesehen, mit dem die Stickoxid-Konzentration im Abgas stromabwärts des SCR-Katalysators erfassbar ist. Die Emissionsregelung, mithin die Ansteuerung der Dosiereinrichtung, erfolgt bevorzugt anhand einer Soll/Ist-Abweichung zwischen der Bestimmungsgröße und der durch den zweiten Stickoxid-Sensor erfassten Ist-Konzentration an Stickoxiden stromabwärts des SCR-Katalysators. Der Begriff "ansteuern" schließt aber sowohl eine Steuerung als auch eine Regelung ein.

Dass die Bestimmungsgröße "konstant" ist, bedeutet hier, dass diese nicht in Abhängigkeit von einer Alterung des SCR-Katalysators beeinflusst oder verändert wird. Dem steht nicht entgegen, dass die Bestimmungsgröße vorzugsweise betriebspunktabhängig, insbesondere abhängig von einem Betriebspunkt der Brennkraftmaschnine, ist, und bevorzugt betriebspunktabhängig aus einem Kennfeld ausgelesen wird. Auch dieses Kennfeld bleibt aber in diesem Sinne konstant, dass es nicht abhängig von einer Alterung des SCR-Katalysators verändert wird.

Im Rahmen der ersten Betriebsart der Brennkraftmaschine wird die Soll-Stickoxid-Konzentration stromabwärts des SCR-Katalysators als Bestimmungsgröße vorzugsweise konstant gehalten. Eine Adaption des Betriebs der Brennkraftmaschine an eine Alterung des SCR-Katalysators erfolgt demnach in der ersten Betriebsart vorzugsweise ausschließlich durch Absenken der Stickoxid-Rohemissionen der Brennkraftmaschine.

Es wird eine Ausführungsform des Verfahrens bevorzugt, die sich dadurch auszeichnet, dass der SCR-Katalysator im Betrieb permanent auf eine Alterung hin überwacht wird. Die Alterungserkennung wird also während des Betriebs des SCR-Katalysators und damit insbesondere auch während des Betriebs der Brennkraftmaschine fortlaufend durchgeführt. Dies hat den Vorteil, dass sehr flexibel auf eine im realen System tatsächlich auftretende Alterung des SCR-Katalysators reagiert werden kann, sodass es insbesondere keiner komplexen und schwer zu bedatenden Alterungsmodelle bedarf.

Es wird auch eine Ausführungsform des Verfahrens bevorzugt, die sich dadurch auszeichnet, dass der mindestens eine Prozessparameter in einem initialen Betriebszustand in Richtung eines kraftstoffverbrauchsoptimalen Betriebs der Brennkraftmaschine eingestellt wird. Dies bedeutet insbesondere, dass der Sollwert für die Stickoxid-Rohemissionen zu Beginn des Betriebs der Brennkraftmaschine, also in dem initialen Betriebszustand, so gewählt wird, dass einerseits auf der Grundlage der hohen Umsatzrate des neuwertigen SCR-Katalysators inklusive der Alterungsreserve noch die gesetzlichen Grenzwerte für die Stickoxidemissionen eingehalten werden, wobei aber andererseits diese existierenden Grenzwerte zugunsten eines niedrigen Verbrauchs der Brennkraftmaschine ausgeschöpft werden, wobei insbesondere der Sollwert für die Stickoxid-Rohemissionen so hoch wie möglich gewählt wird. Auf diese Weise ist es möglich, die Alterungsreserve in Form der sehr hohen Umsatzrate des SCR-Katalysators zu Beginn von dessen Lebenszeit auszunutzen, um den Verbrauch der Brennkraftmaschine an Brennstoff deutlich abzusenken.

Im Rahmen des Verfahrens ist bevorzugt vorgesehen, dass in einem Fall, in welchem keine Alterung durch die Alterungserkennung erkannt wird, der mindestens eine Prozessparameter konstant gehalten wird. Die Stickoxid-Rohemissionen und insbesondere der für diese vorgesehene Sollwert werden also bevorzugt nicht verändert und insbesondere nicht abgesenkt, wenn keine Alterung des SCR-Katalysators erkannt wird. Vielmehr werden diese nur bedarfsgerecht dann abgesenkt, wenn tatsächlich eine Alterung und damit insbesondere eine reduzierte Umsatzrate des SCR-Katalysators erkannt wird. Dadurch ist es möglich, den Verbrauch der Brennkraftmaschine in sowohl für die Kosten als auch unter Umweltaspekten günstiger Weise möglichst lange auf einem möglichst niedrigen Niveau zu halten.

Es wird eine Ausführungsform des Verfahrens bevorzugt, die sich dadurch auszeichnet, dass der mindestens eine Prozessparameter, wenn eine Alterung des SCR-Katalysators erkannt wird, in Richtung einer Verringerung der Stickoxid-Rohemissionen verändert wird, wenn die Stickoxid-Rohemission größer ist als eine vorbestimmte Stickoxid-Minimalrohemission.

Unter einer Stickoxid-Rohemission oder auch unter "Stickoxid-Rohemissionen" wird hier insbesondere eine Stickoxid-Konzentration im Abgas stromabwärts eines Motorblocks der Brennkraftmaschine und stromaufwärts eines SCR-Katalysators und insbesondere stromaufwärts einer Dosiereinrichtung für ein Reduktionsmittel oder ein Reduktionsmittelvorläuferprodukt verstanden. Entsprechend wird unter einer vorbestimmten Stickoxid-Minimalrohemission vorzugsweise eine vorbestimmte Minimalkonzentration von Stickoxid stromabwärts eines Motorblocks der Brennkraftmaschine und stromaufwärts des SCR-Katalysators sowie bevorzugt stromaufwärts der Dosiereinrichtung für das Reduktionsmittel oder für das Reduktionsmittelvorläuferprodukt verstanden.

Die Stickoxid-Minimalrohemission wird bevorzugt so festgelegt, dass bei einem Einhalten oder Überschreiten dieses Werts ein Einhalten anderer Grenzwerte sowie ein sicherer und stabiler Betrieb der Brennkraftmaschine gewährleistet ist. Wird dagegen die Stickoxid-Minimalrohemission erreicht oder unterschritten, kann eine Einhaltung anderer Grenzwerte, insbesondere Emissionsgrenzwerte, und/oder ein sicherer oder stabiler Betrieb der Brennkraftmaschine nicht mehr gewährleistet werden.

Aus diesem Grund wird vorzugsweise der mindestens eine Prozessparameter nur dann in Richtung einer Verringerung der Stickoxid-Rohemission verändert, wenn diese noch größer sind als das Niveau der vorbestimmten Stickoxid-Minimalrohemission, weil ansonsten ein Überschreiten anderer Grenzwerte und/oder eine reduzierte Stabilität oder Sicherheit des Betriebs der Brennkraftmaschine zu befürchten ist.

Unter einem stabilen Betrieb der Brennkraftmaschine ist hier insbesondere ein Betrieb zu verstehen, in dem weder ein Aussetzerbetrieb, also eine fehlende Gemischzündung in einem Brennraum der Brennkraftmaschine, noch eine klopfende Verbrennung in dem Brennraum zu befürchten sind. Demgegenüber ist ein instabiler Betrieb der Brennkraftmaschine ein Betrieb, bei welchem Aussetzer, insbesondere Zündaussetzer, und/oder klopfende Verbrennungen auftreten.

Die Veränderung des Prozessparameters wird vorzugsweise beendet, wenn die Stickoxid-Rohemission größer ist als die vorbestimmt Stickoxid-Minimalrohemission und zugleich keine Alterung mehr erkannt wird. In diesem Fall bedarf es keiner Veränderung des Prozessparameters hin zu einer niedrigeren Stickoxid-Rohemission mehr, und die Brennkraftmaschine kann weiterhin bei der dann erreichten Stickoxid-Rohemission mit im Vergleich zu dem Niveau der Stickoxid-Minimalrohemission verbessertem Verbrauch betrieben werden.

Alternativ oder zusätzlich wird die Veränderung des Prozessparameters bevorzugt beendet, wenn die Stickoxid-Rohemission das Niveau der Stickoxid-Minimalrohemission erreicht oder unterschreitet. In diesem Fall droht/drohen nämlich ein Überschreiten anderer Grenzwerte und/oder ein instabiler Betrieb der Brennkraftmaschine, sodass es günstig ist, die Stickoxid-Rohemission nicht weiter zu reduzieren. Vielmehr kann bei einer bevorzugten Ausführungsform des Verfahrens bei Unterschreiten der Stickoxid-Minimalrohemission eine Begrenzung der Stickoxid-Rohemission auf das Niveau der Stickoxid-Minimalrohemission vorgesehen sein. Der Prozessparameter wird dann bevorzugt im weiteren Verlauf des Verfahrens konstant gehalten, wobei die Brennkraftmaschine vorzugsweise fortgesetzt auf dem Niveau der vorbestimmten Stickoxid-Minimalrohemission betrieben wird.

Es wird eine Ausführungsform des Verfahrens bevorzugt, bei der vorgesehen ist, dass der mindestens eine Prozessparameter konstant gehalten wird, wenn eine Alterung des SCR-Katalysators erkannt wird, zugleich aber die Stickoxid-Rohemission das Niveau der vorbestimmten Stickoxid-Minimalrohemission erreicht oder unterschreitet. Auch eine weitere Erkennung einer Alterung des SCR-Katalysators führt dann insbesondere unter dem Gesichtspunkt einer Einhaltung weiterer Grenzwerte und/oder eines stabilen Betriebs der Brennkraftmaschine nicht zu einer weiteren Veränderung des Prozessparameters. Vielmehr wird die Brennkraftmaschine - wie bereits erläutert - in diesem Fall fortgesetzt bevorzugt auf dem konstanten Niveau der vorbestimmten Stickoxid-Minimalrohemission betrieben.

Es wird eine Ausführungsform des Verfahrens bevorzugt, die sich dadurch auszeichnet, dass die Brennkraftmaschine in eine zweite Betriebsart geschaltet wird, wenn die Stickoxid-Rohemission das Niveau der vorbestimmten Stickoxid-Minimalrohemission erreicht oder unterschreitet. In dieser zweiten Betriebsart ist vorgesehen, dass die Emissionsregelung auf der Grundlage einer durch die Alterungserkennung veränderten Bestimmungsgröße für die Stickoxid-Konzentration stromabwärts des SCR-Katalysators durchgeführt wird. Es wird also nun in der zweiten Betriebsart die Emissionsregelung nicht mehr auf der Grundlage der konstanten Bestimmungsgröße, also insbesondere einer konstanten Soll-Stickoxid-Konzentration stromabwärts des SCR-Katalysators betrieben, sondern vielmehr wird nun durch die Alterungserkennung die Bestimmungsgröße und damit insbesondere die Soll-Stickoxid-Konzentration stromabwärts des SCR-Katalysators verändert, um den Betrieb des Systems aus der Brennkraftmaschine und dem Abgasnachbehandlungssystem an eine Alterung des SCR-Katalysators anzupassen. Durch diese Vorgehensweise kann auch bei konstant gehaltenem Prozessparameter und insbesondere konstanter Stickoxid-Rohemission eine Adaption an die Alterung und insbesondere an eine sinkende Umsatzrate des SCR-Katalysators bei gleichzeitiger Einhaltung gesetzlicher Grenzwerte erreicht werden.

Die Alterungserkennung und insbesondere auch die Veränderung der Bestimmungsgröße auf der Grundlage der Alterungserkennung wird bevorzugt mittels eines Verfahrens durchgeführt, welche im Folgenden detailliert erläutert wird:
Dieses Verfahren weist insbesondere folgende Schritte auf: Es wird eine Durchbrucherkennung für den SCR-Katalysator durchgeführt wird, wobei, wenn ein Durchbruch erkannt wird, die Bestimmungsgröße zu höherer Stickoxid-Konzentration stromabwärts des SCR-Katalysators hin verändert wird.

In der ersten Betriebsart wird die Dosiereinrichtung zum Eindosieren eines Reduktionsmittels auf der Grundlage der die Stickoxid-Konzentration stromabwärts des SCR-Katalysators beeinflussenden, konstanten Bestimmungsgröße angesteuert. In der zweiten Betriebsart wird die Dosiereinrichtung zur Eindosierung des Reduktionsmittels auf der Grundlage der veränderten Bestimmungsgröße angesteuert.

Mittels der Durchbrucherkennung ist es insbesondere möglich, eine Alterungsadaption für den Betrieb des Abgasnachbehandlungssystems vorzunehmen, welche - unabhängig von einem Alterungsmodell - an die tatsächliche Alterung des SCR-Katalysators angepasst ist. Somit kann flexibel auch auf eine übermäßige Alterung des Systems im Betrieb reagiert werden, für welche gegebenenfalls eine Auslegungsreserve nicht ausreichend ist. Auch in diesen Fällen wird durch die mithilfe des Verfahrens zur Verfügung gestellte Alterungs-Adaption ein stabiler Betrieb des Systems ermöglicht. Ein unerwünschter Reduktionsmittel-Schlupf kann in der zweiten Betriebsart durch die Ansteuerung der Dosiereinrichtung auf der Grundlage der veränderten Bestimmungsgröße vermieden werden. Insbesondere wird durch die im Rahmen des Verfahrens durchgeführte Alterungs-Adaption eine betriebspunktabhängige Begrenzung der von dem Abgasnachbehandlungssystem angeforderten Umsatzrate vorgenommen, um einen sicheren Betrieb des Systems ohne Reduktionsmittel-Schlupf auch bei extremer Alterung sicherzustellen.

Unter einer Durchbrucherkennung wird ein Verfahren verstanden, mittels dem ein auftretender Reduktionsmittel-Schlupf, insbesondere ein Ammoniak-Schlupf, durch den SCR-Katalysator, oder eine erhöhte Stickoxid-Emission durch einen erhöhten Ammoniak-Umsatz in einem dem SCR-Katalysator nachgeschalteten Ammoniak-Sperrkatalysator, im Betrieb erkannt werden kann. Ein Verfahren zur Durchführung einer solchen Durchbrucherkennung, insbesondere einer dynamischen Durchbrucherkennung, ist in der deutschen Patentschrift DE 10 2011 011 441 B3 offenbart, wobei auf die Lehre dieses Dokuments verwiesen wird. Bevorzugt wird das dort offenbarte Verfahren zur Durchbrucherkennung im Rahmen des hier vorgeschlagenen Verfahrens eingesetzt.

Dabei wird insbesondere aus einer Dosierrate eines vor dem SCR-Katalysator dem Abgasstrom zugegebene Reduktionsmittels anhand eines Modells des dynamischen Verhaltens des SCR-Katalysators für mindestens eine lineare Sensorkennlinie, die den Bereich des normalen Betriebs abbildet, und mindestens eine lineare Sensorkennlinie, die den Bereich des Durchbruchs oder Ammoniak-Schlupfes abbildet, jeweils ein Erwartungswert für die Umsatzrate ermittelt. Dieser Erwartungswert wird mit einer aus einem von einem stromab zum SCR-Katalysator angeordneten Stickoxid-Sensor ermittelten Messwert ermittelten realen Umsatzrate verglichen. Für jede Kennlinie wird jeweils eine Stellgröße für die Anpassung der realen Umsatzrate an den Erwartungswert berechnet. Diejenige Kennlinie wird ausgewählt, für welche die kleinste Stellgröße berechnet wurde. Bevorzugt umfasst dabei die Überwachung die dynamische Erkennung eines Katalysatordurchbruchs. Zusätzlich oder alternativ umfasst bevorzugt die Überwachung die Ermittlung der maximalen Umsatzrate des SCR-Katalysators. Zusätzlich oder alternativ bilden bevorzugt mehrere verschiedene Kennlinien den Bereich des Durchbruchs ab. Es ist bevorzugt vorgesehen, dass die verschiedenen Kennlinien verschiedenen maximalen Umsatzraten entsprechen. Zusätzlich oder alternativ ist bevorzugt vorgesehen, dass die im Modell des dynamischen Verhaltens des SCR-Katalysators verwendeten Parameter abhängig sind von einem oder mehreren Betriebsparameter(n) des SCR-Katalysators.

Unter einem Durchbruch wird also insbesondere ein Zustand des SCR-Katalysators verstanden, bei welchem das durch die Dosiereinrichtung eindosierte Reduktionsmittel an dem SCR-Katalysator nicht vollständig umgesetzt wird, sondern vielmehr ein Anteil des Reduktionsmittels ohne zu reagieren durch den Katalysator geschleust wird und stromabwärts des Katalysators im Abgas vorhanden ist. Das Reduktionsmittel, insbesondere Ammoniak, führt zu einem erhöhten Sensorsignal an dem Stickoxid-Sensor, weil dieser typischerweise eine Querempfindlichkeit zwischen Stickoxiden einerseits und Ammoniak andererseits aufweist. Daher ist es möglich, mithilfe des zuvor beschriebenen Verfahrens zur Durchbrucherkennung insbesondere anhand der Messwerte des Stickoxid-Sensors einen Durchbruch und insbesondere einen Ammoniak-Schlupf des SCR-Katalysators zu detektieren.

Dass die Bestimmungsgröße zu höherer Stickoxidkonzentration stromabwärts des SCR-Katalysators hin verändert wird, wenn ein Durchbruch erkennt wird, bedeutet insbesondere, dass die Bestimmungsgröße derart verändert wird, dass tendenziell aufgrund der veränderten Bestimmungsgröße und der grundsätzlichen Abhängigkeit der Stickoxid-Konzentration stromabwärts des SCR-Katalysators von der Bestimmungsgröße ein Anstieg der Stickoxid-Konzentration stromabwärts des SCR-Katalysators aufgrund der Änderung zu erwarten wäre. Dies bedeutet aber nicht notwendigerweise, dass durch die Veränderung der Bestimmungsgröße in der zweiten Betriebsart auch tatsächlich eine höhere Stickoxid-Konzentration stromabwärts des SCR-Katalysators eintritt. Ist nämlich beispielsweise die Bestimmungsgröße ein Sollwert für die Stickoxid-Konzentration stromabwärts des SCR-Katalysators und befindet sich der SCR-Katalysator im Durchbruch, ist in diesem Betriebszustand des SCR-Katalysators keine Regelung der Stickoxid-Konzentration mehr möglich. Dies bedingt tendenziell eine erhöhte Stickoxid-Konzentration stromabwärts des SCR-Katalysators. Wird nun die Bestimmungsgröße zu höherer Stickoxid-Konzentration stromabwärts des SCR-Katalysators hin verändert, was letztlich bedeutet, dass der Sollwert für die Emissionsregelung angehoben wird, ist es möglich, dass eine stabile Regelung der Emission mit dem gealterten SCR-Katalysator wieder möglich wird. Dies liegt daran, dass mit der noch bestehenden, maximalen Umsatzrate des gealterten SCR-Katalysators eine Erfüllung des neuen, veränderten Sollwerts möglich ist, wobei eine Erfüllung des vorhergehenden Sollwerts, vor der Veränderung der Bestimmungsgröße, nicht mehr möglich war. Es ist dann möglich, dass aufgrund der wieder stabilen Emissionsregelung die tatsächlich auftretende Stickoxid-Konzentration stromabwärts des SCR-Katalysators sinkt, obwohl die Bestimmungsgröße tendenziell zu höherer Stickoxid-Konzentration stromabwärts des SCR-Katalysators verändert wurde.

Dass die Dosiereinrichtung zur Eindosierung des Reduktionsmittels in der zweiten Betriebsart auf der Grundlage der veränderten Bestimmungsgröße angesteuert wird, bedeutet insbesondere, dass statt der ursprünglichen konstanten Bestimmungsgröße nun die veränderte Bestimmungsgröße verwendet wird, um die Dosiereinrichtung anzusteuern, insbesondere zur steuern oder zu regeln.

Die Dosiereinrichtung wird bevorzugt auf der Grundlage der Bestimmungsgröße und zusätzlich auf der Grundlage eines Messsignals eines Abgassensors, insbesondere eines Stickoxid-Sensors, der stromabwärts des SCR-Katalysators angeordnet ist, angesteuert. Auf diese Weise ist es insbesondere mögliche, eine Emissionsregelung für das Abgasnachbehandlungssystem und insbesondere für den SCR-Katalysator durchzuführen.

Es wird eine Ausführungsform des Verfahrens bevorzugt, die sich dadurch auszeichnet, dass der SCR-Katalysator im Betrieb permanent auf einen Durchbruch überwacht wird. Dies bedeutet insbesondere, dass der SCR-Katalysator dann, wenn Abgas durch das Abgasnachbehandlungssystem strömt, dieses sich also im Betrieb befindet, kontinuierlich oder in vorbestimmten Zeitabständen, insbesondere periodisch, auf einen Durchbruch hin überwacht wird, wobei insbesondere eine Durchbrucherkennung gemäß dem zuvor beschriebenen Verfahren bevorzugt kontinuierlich oder in vorbestimmten Zeitabständen, insbesondere periodisch, durchgeführt wird. Dies hat den Vorteil, dass eine Alterungsadaption für das Abgasnachbehandlungssystem und insbesondere für den SCR-Katalysator fortwährend und insbesondere von einer ersten Inbetriebnahme des Abgasnachbehandlungssystem an durchführbar ist. Es bedarf also insbesondere weder eines Alterungsmodells noch eines Rückgriffs auf einen Betriebsstundenzähler oder einer anderen Einrichtung zur Erfassung eines Betriebsalters des Abgasnachbehandlungssystems und/oder des SCR-Katalysators.

Es wird eine Ausführungsform des Verfahrens bevorzugt, die sich dadurch auszeichnet, dass die Bestimmungsgröße eine Soll-Stickoxid-Konzentration stromabwärts des SCR-Katalysators ist. In diesem Fall bedeutet eine Veränderung der Soll-Stickoxid-Konzentration stromabwärts des SCR-Katalysators zu einer höheren Stickoxid-Konzentration stromabwärts des SCR-Katalysators hin insbesondere, dass die Bestimmungsgröße angehoben, also zu einem höheren Wert hin verändert wird. Die Bestimmungsgröße wird vorzugsweise durch Neuberechnung der Bestimmungsgröße auf der Grundlage einer Adaptionsgröße verändert. Dabei wird unter einer Adaptionsgröße eine Größe verstanden, von welcher die Bestimmungsgröße abhängt oder welche die Bestimmungsgröße beeinflusst, oder eine Größe, welche in eine Berechnung der veränderten Bestimmungsgröße eingeht. Vorzugsweise ist die Adaptionsgröße eine vorbestimmte Stickoxid-Umsatzrate des SCR-Katalysators.

Insbesondere ist vorgesehen, dass eine Veränderung der Bestimmungsgröße durch rechnerische Verknüpfung der Bestimmungsgröße mit der Adaptionsgröße durchgeführt wird. Die veränderte Bestimmungsgröße wird also insbesondere aus der Adaptionsgröße neu berechnet, wenn sich die Adaptionsgröße ändert. Die Adaptionsgröße ist vorzugsweise gleich einem vorbestimmten Inertialwert, wenn eine Ist-Stickoxid-Konzentration - die vorzugsweise von dem Abgassensor, insbesondere dem Stickoxid-Sensor stromabwärts des SCR-Katalysators, erfasst wird - stromabwärts des SCR-Katalysators gleich der Bestimmungsgröße ist. Dabei ist ein Inertialwert insbesondere ein Wert, der in Hinblick auf die Berechnung der Bestimmungsgröße in dem Sinne neutral ist, dass sich die Bestimmungsgröße nicht ändert, wenn die Adaptionsgröße den Inertialwert aufweist. Insbesondere führt eine Neuberechnung der Bestimmungsgröße auf der Grundlage des Inertialwerts nicht zu einer Veränderung der Bestimmungsgröße. Wird als Adaptionsgröße eine vorbestimmte Stickoxid-Umsatzrate des SCR-Katalysators verwendet, und wird diese vorbestimmte Umsatzrate in Prozent ausgedrückt, ist der Inertialwert beispielsweise 1. Ist die Ist-Stickoxid-Konzentration stromabwärts des SCR-Katalysators gleich der Bestimmungsgröße, ergibt sich kein Änderungsbedarf, sodass die Adaptionsgröße vorteilhaft mit dem Inertialwert gleichgesetzt werden kann.

Die Adaptionsgröße ist insbesondere so gewählt, dass eine Verringerung der Adaptionsgröße zu einer Erhöhung der Bestimmungsgröße führt. Ist beispielsweise die Adaptionsgröße eine vorbestimmte Stickoxid-Umsatzrate an dem SCR-Katalysator, so führt eine Verringerung dieser Umsatzrate dazu, dass sich die Soll-Stickoxid-Konzentration stromabwärts des SCR-Katalysator als veränderte Bestimmungsgröße erhöht, weil an dem SCR-Katalysator eine geringere Menge an Stickoxid pro Zeiteinheit umgesetzt werden kann.

Die Adaptionsgröße wird bevorzugt verringert, wenn ein Durchbruch erkannt wird. Wird nämlich ein Durchbruch erkannt, bedeutet dies insbesondere, dass die Umsatzrate des SCR-Katalysators - insbesondere aufgrund von Alterungseffekten - gesunken ist. Dies kann insbesondere zur Folge haben, dass eine Emissionsregelung mit dem SCR-Katalysator insbesondere durch Ansteuerung der Dosiereinrichtung nicht mehr möglich ist. Wird nun die Stickoxid-Umsatzrate als Adaptionsgröße im Rahmen des Verfahrens verringert, und wird die Bestimmungsgröße auf der Grundlage dieser verringerten Umsatzrate neu berechnet, führt dies zu einer Anhebung der Soll-Stickoxid-Konzentration stromabwärts des SCR-Katalysators als veränderte Bestimmungsgröße, wobei die Dosiereinrichtung auf der Grundlage dieser veränderten Bestimmungsgröße, also der angehobenen Soll-Stickoxid-Konzentration, angesteuert wird. Dies führt wiederum vorteilhaft dazu, dass eine Emissionsregelung mittels des SCR-Katalysators und der Dosiereinrichtung wieder möglich wird, da der SCR-Katalysator trotz Alterung mittels der neuen Ansteuerung der Dosiereinrichtung die neue Soll-Stickoxid-Konzentration erreichen kann.

Es ist insbesondere vorgesehen, dass die Adaptionsgröße so gewählt ist, dass eine Erhöhung der Adaptionsgröße zu einer Verringerung der Bestimmungsgröße führt. Wird beispielsweise die vorbestimmte Stickoxid-Umsatzrate des SCR-Katalysators als Adaptionsgröße erhöht, bedeutet dies letztlich, das erwartet wird, dass der SCR-Katalysator eine größere Umsatzrate aufweist. In diesem Fall sinkt die Soll-Stickoxid-Konzentration stromabwärts des SCR-Katalysators als veränderte Bestimmungsgröße bevorzugt, weil eine stabile Emissionsregelung auch bei dem geringeren Sollwert möglich erscheint. Dies kann insbesondere genutzt werden, wenn die Adaptionsgröße in einem vorgelagerten Schritt des Verfahrens zu stark verringert und die Bestimmungsgröße zu stark erhöht wurde. Es kann dann eine Rückführung der Größen, nämlich insbesondere eine Erhöhung der Adaptionsgröße und eine Verringerung der Bestimmungsgröße, erfolgen, damit die Stickoxid-Emissionen im Betrieb des Abgasnachbehandlungssystems nicht systematisch zu hoch ausfallen. Dieses Verhalten kann weiterhin genutzt werden, wenn der SCR-Katalysator getauscht wird, wobei dann durch Erhöhen der Adaptionsgröße und Verringern der Bestimmungsgröße eine Anpassung an den neuen, vorzugsweise neuwertigen und insbesondere nicht gealterten SCR-Katalysators erfolgen kann.

Es wird auch eine Ausführungsform des Verfahrens bevorzugt, die sich dadurch auszeichnet, dass die Bestimmungsgröße eine Soll-Stickoxid-Konzentration stromabwärts des SCR-Katalysators, insbesondere für eine Emissionsregelung des SCR-Katalysators ist, wobei eine Veränderung der Bestimmungsgröße durch rechnerische Verknüpfung der Bestimmungsgröße mit der Adaptionsgröße durchgeführt wird, wobei die Adaptionsgröße bevorzugt eine vorbestimmte Differenz-Stickoxid-Konzentration ist, insbesondere ein vorbestimmter - positiver oder negativer - Additionswert zur additiven Verrechnung mit der Soll-Stickoxid-Konzentration. Die Adaptionsgröße wird also bevorzugt zur Berechnung der veränderten Bestimmungsgröße jeweils mit einem vorbestimmten und festgehaltenen Initialwert der Bestimmungsgröße additiv verknüpft, wobei eine Erhöhung der Adaptionsgröße zu einer Erhöhung der veränderten Bestimmungsgröße führt, und wobei im Übrigen vorzugsweise eine Erniedrigung der Adaptionsgröße zu einer Erniedrigung der veränderten Bestimmungsgröße führt. Wie bereits zuvor beschrieben, ist die Adaptionsgröße bevorzugt gleich einem vorbestimmten Inertialwert, wenn eine Ist-Stickoxid-Konzentration stromabwärts des SCR-Katalysators gleich der Bestimmungsgröße ist. Dabei ist der vorbestimmte Inertialwert bei additiver Verknüpfung der Adaptionsgröße mit dem vorbestimmten, festgelegten und insbesondere festgehaltenen Initialwert für die Soll-Stickoxid-Konzentration als Bestimmungsgröße insbesondere gleich Null, weil sich dann aus der additiven Verknüpfung keine Veränderung ergibt, sondern vielmehr der vorbestimmte Initialwert als Bestimmungsgröße verwendet wird. Die Adaptionsgröße wird insbesondere erhöht, wenn ein Durchbruch erkannt wird. Es ist offensichtlich, dass auf diese Weise unmittelbar als Reaktion auf einen Durchbruch die Soll-Stickoxid-Konzentration als Bestimmungsgröße angehoben werden kann, sodass insbesondere wieder eine stabile Emissionsregelung mittels des SCR-Katalysators durch Ansteuerung der Dosiereinrichtung möglich ist.

Es wird auch eine Ausführungsform des Verfahrens bevorzugt, die sich dadurch auszeichnet, dass die Adaptionsgröße während eines bestimmten Adaptionszeitraums bestimmt wird, in dem sich der SCR-Katalysator in einem stationären Zustand befindet. Dabei bedeutet ein stationärer Zustand des SCR-Katalysators und/oder des Abgasnachbehandlungssystems insbesondere einen Zustand, in welchem sich die Abgastemperatur um nicht mehr als eine vorbestimmte Temperaturdifferenz pro Zeiteinheit ändert, beispielsweise um nicht mehr als 5 °C pro Minute, wobei der Zustand zugleich mindestens eine vorbestimmte Einregelungszeit andauert, beispielsweise 30 Sekunden. Bevorzugt bedeutet ein stationärer Zustand des SCR-Katalysators, dass dieser eine - im zuvor erwähnten Sinne - konstante Abgastemperatur, und einen insbesondere innerhalb vorbestimmter Grenzen - vorbestimmten Abgasmassenstrom aufweist. Der bestimmte Adaptionszeitraum währt vorzugsweise solange, wie an dem SCR-Katalysator stationäre Bedingungen herrschen, dieser also in dem stationären Zustand angeordnet ist. Die Adaptionsgröße wird also bevorzugt nur dann und nur solange bestimmt, wie stationäre Bedingungen an dem SCR-Katalysator herrschen. Befindet sich der SCR-Katalysator in einem instationären, insbesondere transienten Zustand, wird die Adaptionsgröße bevorzugt nicht bestimmt, und/oder die Bestimmung der Adaptionsgröße wird vorzugsweise abgebrochen, wenn instationäre, insbesondere transiente Bedingungen an dem SCR-Katalysator auftreten. Dies ist vorteilhaft, weil letztlich nur unter stationären Bedingungen verlässliche Informationen über den Alterungszustand des SCR-Katalysators erhalten werden können. Eine Bestimmung der Adaptionsgröße auch unter nicht-stationären Bedingungen birgt dagegen das Risiko, dass die tatsächliche Alterung des SCR-Katalysators nicht genau erfasst und damit die Adaptionsgröße fehlerhaft bestimmt wird.

Im Rahmen des Verfahrens ist daher bevorzugt vorgesehen, dass vor einer Bestimmung der Adaptionsgröße geprüft wird, ob sich der SCR-Katalysator in einem stationären Zustand befindet, wobei die Adaptionsgröße nur bestimmt wird, wenn sich der SCR-Katalysator in einem stationären Zustand befindet. Weiter ist bevorzugt vorgesehen, dass die Bestimmung der Adaptionsgröße abgebrochen wird, wenn der stationäre Zustand für den SCR-Katalysator endet.

Es wird auch eine Ausführungsform des Verfahrens bevorzugt, die sich dadurch auszeichnet, dass die Adaptionsgröße in dem bestimmten Adaptionszeitraum inkrementell zu höherer Stickoxid-Konzentration stromabwärts des SCR-Katalysators hin verändert wird, wenn ein Durchbruch erkannt wird. Dabei bedeutet eine Veränderung der Adaptionsgröße zu höherer Stickoxid-Konzentration stromabwärts des SCR-Katalysators hin hier - analog zu den vorhergehenden Ausführungen zu der Bestimmungsgröße -, dass die Adaptionsgröße derart verändert wird, dass sich hieraus eine Veränderung der Bestimmungsgröße zu höherer Stickoxid-Konzentration stromabwärts des SCR-Katalysators hin ergibt. Dies bedeutet - wie ebenfalls zuvor bereits ausgeführt - nicht notwendigerweise, dass tatsächlich die stromabwärts des SCR-Katalysators auftretende Stickoxid-Konzentration steigt. Vielmehr kann es aufgrund einer mit der geänderten Adaptionsgröße und der veränderten Bestimmungsgröße wieder möglichen, stabilen Regelung der Emission vorkommen, dass die tatsächliche Stickoxid-Konzentration stromabwärts des SCR-Katalysators sinkt.

Dass die Adaptionsgröße inkrementell verändert wird, bedeutet insbesondere, dass diese in vorherbestimmten, insbesondere konstanten Adaptionsschritten angepasst wird, wobei vorzugsweise auf jeden erkannten Durchbruch ein Anpassungsschritt folgt. Dabei ist es möglich, dass die Adaptionsgröße in einem Anpassungsschritt mit einem vorbestimmten Anpassungsfaktor verrechnet wird, es ist aber auch möglich, dass die Adaptionsgröße in einem Anpassungsschritt mit einem vorbestimmten Summanden verrechnet wird.

Insgesamt wird also vorzugsweise in dem bestimmten Adaptionszeitraum unter stationären Bedingungen des SCR-Katalysators jedes Mal dann eine inkrementelle Veränderung der Adaptionsgröße durchgeführt, wenn ein Durchbruch erkannt wird.

Die Veränderung der Adaptionsgröße wird vorzugsweise beendet, wenn kein Durchbruch mehr erkannt wird. Dieser Vorgehensweise liegt der Gedanke zugrunde, dass es keiner Anpassung der Adaptionsgröße und auch der Bestimmungsgröße mehr bedarf, wenn kein Durchbruch des SCR-Katalysators mehr festgestellt werden kann. Vielmehr kann dann davon ausgegangen werden, dass die Adaptionsgröße und auch die Bestimmungsgröße für einen stabilen Betrieb des SCR-Katalysators und des Abgasnachbehandlungssystems in ausreichender Weise verändert wurden.

Es wird auch eine Ausführungsform des Verfahrens bevorzugt, die sich dadurch auszeichnet, dass die Adaptionsgröße in dem bestimmten Adaptionszeitraum inkrementell zu niedrigerer Stickoxid-Konzentration stromabwärts des SCR-Katalysators hin verändert wird, wenn kein Durchbruch erkannt wird, und wenn die Adaptionsgröße nicht gleich dem vorbestimmten Inertialwert ist. Dieser Vorgehensweise liegt der Gedanke zugrunde, dass gegebenenfalls bei einer vorhergehenden Anpassung der Adaptionsgröße zu höherer Stickoxid-Konzentration hin eine Überanpassung erfolgt ist, wodurch die Stickoxid-Emissionen des Abgasnachbehandlungssystems systematisch zu hoch ausfallen. Diese Überanpassung kann vorteilhaft rückgängig gemacht werden, wenn die Adaptionsgröße wieder rückverändert wird, nämlich zu niedrigerer Stickoxid-Konzentration hin, wenn kein Durchbruch mehr erkannt wird, wobei eine solche Rückanpassung nur dann durchgeführt wird, wenn die Adaptionsgröße tatsächlich bereits verändert wurde, also nicht dem - bevorzugt insbesondere als Initialwert zu Beginn des Verfahrens gewählten - vorbestimmten Inertialwert entspricht. Ist nämlich die Adaptionsgröße gleich dem vorbestimmten Inertialwert, weist diese insbesondere einen Wert auf, der angepasst ist auf einen nicht gealterten, insbesondere neuwertigen SCR-Katalysator, wobei eine Rückanpassung der Adaptionsgröße zu niedrigerer Stickoxid-Konzentration stromabwärts des SCR-Katalysators hin keinen Sinn ergibt.

Die Veränderung der Adaptionsgröße zu niedriger Stickoxid-Konzentration stromabwärts des SCR-Katalysators hin wird bevorzugt beendet, sobald die Adaptionsgröße gleich dem vorbestimmten Inertialwert ist. Dies entspricht insbesondere einem Beenden der Veränderung dann, wenn ein initialer Ausgangswert der Adaptionsgröße wieder erreicht und quasi der Zustand für einen neuwertigen SCR-Katalysator wieder hergestellt ist.

Die Veränderung der Adaptionsgröße zu niedrigerer Stickoxid-Konzentration stromabwärts des SCR-Katalysators hin wird bevorzugt alternativ oder zusätzlich beendet, wenn ein Durchbruch erkannt wird. Dieser Vorgehensweise liegt der Gedanke zugrunde, dass eine weitere Veränderung der Adaptionsgröße zu niedrigerer Stickoxid-Konzentration hin nicht mehr sinnvoll ist, wenn ein Durchbruch des SCR-Katalysators vorliegt, was insbesondere bedeutet, dass keine erfolgreiche Emissionsregelung mit dem SCR-Katalysator bei dem derzeitigen Wert der veränderten Bestimmungsgröße mehr möglich ist, sodass eine weitere Anpassung der Adaptionsgröße quasi in die falsche Richtung keinen Sinn mehr ergibt. Bevorzugt wird, wenn ein Durchbruch erkannt wird, ein letztes Änderungsinkrement für die Adaptionsgröße, insbesondere ein letztes Änderungsinkrement zu niedrigerer Stickoxid-Konzentration stromabwärts des SCR-Katalysators hin, wieder rückgängig gemacht. Dieser Vorgehensweise liegt der Gedanke zugrunde, dass offenbar der letzte Änderungsschritt der Adaptionsgröße zu niedrigerer Stickoxid-Konzentration hin ein Schritt zu viel war, weil sich der Katalysator wieder im Durchbruch befindet. Es besteht dann die Chance, dass durch Rückgängigmachen des letzten Änderungsinkrements wieder ein Zustand erreicht wird, in welchem der SCR-Katalysator für eine erfolgreiche Emissionsregelung genutzt werden kann.

Es wird auch eine Ausführungsform des Verfahrens bevorzugt, die sich dadurch auszeichnet, dass in dem Fall, dass die Adaptionsgröße gleich dem vorbestimmten Inertialwert ist, die Adaptionsgröße in dem bestimmten Adaptionszeitraum gleich dem vorbestimmten Inertialwert gehalten wird, wenn kein Durchbruch erkannt wird. Hierdurch kann in vorteilhafter Weise eine Veränderung der Adaptionsgröße und damit auch der Bestimmungsgröße vermieden werden, wenn keine relevante Alterung des SCR-Katalysators feststellbar ist, sodass auch weiterhin eine erfolgreiche Emissionsregelung mit dem SCR-Katalysator auf der Grundlage der unveränderten Bestimmungsgröße möglich erscheint.

Es wird auch eine Ausführungsform des Verfahrens bevorzugt, die sich dadurch auszeichnet, dass bei Erreichen oder Überschreiten eines vorbestimmten Grenzwerts der Adaptionsgröße, oder bei Erreichen oder Überschreiten eines vorbestimmten Grenzwerts der Ist-Stickoxid-Konzentration stromabwärts des SCR-Katalysators, ein Warnsignal erzeugt wird. Somit kann einem Betreiber des Abgasnachbehandlungssystems und insbesondere einem Betreiber einer dem Abgasnachbehandlungssystem vorgeschalteten Brennkraftmaschine signalisiert werden, dass ein kritischer Zustand des SCR-Katalysators erreicht ist, bei welchem eine Überschreitung insbesondere eines gesetzlichen Grenzwerts für die Stickoxid-Emissionen möglich ist, wobei insbesondere die Einhaltung des gesetzlichen Grenzwerts mit dem gealterten SCR-Katalysator selbst bei Anwendung des hier vorgeschlagenen Verfahrens nicht mehr möglich erscheint. Auf das Warnsignal hin kann der Betreiber insbesondere den SCR-Katalysator gegen einen neueren oder neuwertigen SCR-Katalysator tauschen.

Alternativ oder zusätzlich zu der Erzeugung des Warnsignals wird vorzugsweise eine Verringerung einer Stickoxid-Konzentration im Abgas stromaufwärts des SCR-Katalysators initiiert. Dies bedeutet insbesondere, dass eine dem Abgasnachbehandlungssystem vorgeschaltete, Abgas erzeugende Einrichtung, insbesondere eine Brennkraftmaschine, in veränderter Weise, insbesondere mit veränderten Betriebsparametern, angesteuert wird, sodass die Stickoxid-Rohemissionen der vorgeschalteten Einrichtung reduziert werden. Hierdurch kann es insbesondere möglich sein, einen gesetzlichen Grenzwert für die Stickoxidemissionen des Abgasnachbehandlungssystems trotz des gealterten SCR-Katalysators zumindest noch für einen bestimmten Zeitraum einzuhalten, bevor ein Austausch des SCR-Katalysators nötig wird.

Die sich aus dem vorbestimmten Grenzwert ergebende Stickoxid-Konzentration stromabwärts des SCR-Katalysators ist bevorzugt größer oder gleich der Soll-Stickoxid-Konzentration stromabwärts des SCR-Katalysators, insbesondere also bevorzugt größer oder gleich der Bestimmungsgröße. Dieser Ausgestaltung liegt der Gedanke zugrunde, dass die Bestimmungsgröße, und insbesondere die Soll-Stickoxid-Konzentration stromabwärts des SCR-Katalysators, insbesondere kleiner oder höchstens gleich einem gesetzlichen Grenzwert sein soll, um zu gewährleisten, dass der gesetzliche Grenzwert im Betrieb des Abgasnachbehandlungssystem nach Möglichkeit stets eingehalten wird.

Es wird auch eine Ausführungsform des Verfahrens bevorzugt, die sich dadurch auszeichnet, dass Daten zur Bestimmung der Adaptionsgröße während eines ersten Adaptionszeitraums in einem überschreibbaren Kennfeld hinterlegt werden, wobei die Daten in einem zweiten Adaptionszeitraum bereitgestellt werden, wobei der zweite Adaptionszeitraum dem ersten Adaptionszeitraum zeitlich nachgelagert ist. Unter dem Begriff "Daten zur Bestimmung der Adaptionsgröße" wird insbesondere wenigstens ein Datum verstanden, aus welchem die Adaptionsgröße bestimm- oder ableitbar ist. Dabei kann es sich insbesondere auch um den momentanen Wert der Adaptionsgröße selbst handeln. Das überschreibbare Kennfeld stellt insbesondere ein Lernkennfeld dar, welches im Rahmen der Adaption des Betriebs des Abgasnachbehandlungssystems angepasst wird, wobei insbesondere eine Anpassung der Daten zur Bestimmung der Adaptionsgröße an einen tatsächlichen Alterungszustand des SCR-Katalysators erfolgt. Dass die Daten in dem ersten, zeitlich vorgelagerten Adaptionszeitraum hinterlegt und in dem zweiten, zeitlich nachgelagerten Adaptionszeitraum bereitgestellt werden, bedeutet insbesondere, dass - insbesondere nach Unterbrechung zwischen zwei Adaptionszeiträumen aufgrund einer Instationarität des Zustands des SCR-Katalysators - die Daten zur Bestimmung der Adaptionsgröße aus dem letzten Adaptionszeitraum in dem nachfolgenden Adaptionszeitraum weiter verwendet werden können. Es bedarf also dann in einer nächsten stationären Phase des SCR-Katalysators nach einer instationären Phase keiner vollständig neuen Bestimmung der Adaptionsgröße, sondern diese kann vielmehr mit dem zuletzt erreichten Wert fortgeschrieben werden.

In dem überschreibbaren Kennfeld, insbesondere dem Lernkennfeld, werden die Daten oder die Adaptionsgröße vorzugsweise in Abhängigkeit von einer Temperatur des SCR-Katalysators oder einer Abgastemperatur in dem SCR-Katalysator, und einem Abgasmassenstrom hinterlegt. Die Adaptionsgröße selbst ist somit vorzugsweise betriebspunktabhängig, und betriebspunktabhängig in dem Lernkennfeld hinterlegt.

Alternativ oder zusätzlich ist es auch möglich, dass in dem überschreibbaren Kennfeld ein in dem ersten Adaptionszeitraum aktueller Wert der veränderten Bestimmungsgröße hinterlegt wird, der dann in dem zweiten Adaptionszeitraum bereitgestellt wird. Dabei kann der aktuelle Wert der veränderten Bestimmungsgröße auch als Datum zur Bestimmung der Adaptionsgröße herangezogen werden, insbesondere dann, wenn jeweils der aktuelle Wert der veränderten Bestimmungsgröße aus einem vorbestimmten, festgehaltenen Initialwert der Bestimmungsgröße und der aktuellen Adaptionsgröße berechnet wird. In diesem Fall kann mittels einfacher Verrechnung der aktuellen, veränderten Bestimmungsgröße mit der vorbestimmten, festgehaltenen Bestimmungsgröße die Adaptionsgröße bestimmt werden.

Die Verwendung eines überschreibbaren Kennfelds, insbesondere eines Lernkennfelds, ermöglicht es außerdem, für die Soll-Stickoxid-Konzentration stromabwärts des SCR-Katalysators als Bestimmungsgröße ein vorbestimmtes, festgehaltenes, also zeitlich konstantes, Kennfeld zu verwenden, aus welchem insbesondere betriebspunktabhängig jeweils der vorbestimmte, festgehaltene Initialwert der Bestimmungsgröße ausgelesen wird, der dann mit der Adaptionsgröße zur Berechnung der aktuellen, veränderten Bestimmungsgröße verrechnet wird. Dies hat den Vorteil, dass das Kennfeld der Initialwerte stets erhalten bleibt, wobei - insbesondere nach einem Tausch eines SCR-Katalysators - ohne weiteres wieder auf diese Initialwerte zurückgegriffen werden kann.

Bei dem vorbestimmten, festgehaltenen Initialwert der Bestimmungsgröße handelt es sich bevorzugt nicht um einen einzelnen Wert, sondern vielmehr um eine Vielzahl betriebspunktabhängiger Werte, die vorzugsweise in einem Kennfeld hinterlegt sind. Dieses Kennfeld ist bevorzugt als feststehendes, stationäres, insbesondere nicht-überschreibbares Kennfeld ausgestaltet.

Der vorbestimmte, festgehaltene Initialwert für die Bestimmungsgröße wird also vorzugsweise in einem Kennfeld abhängig von einem Betriebszustand einer dem Abgasnachbehandlungssystem vorgeschalteten Einrichtung, insbesondere einer Brennkraftmaschine, hinterlegt. Besonders bevorzugt wird der vorbestimmte, festgehaltene Initialwert in dem Kennfeld in Abhängigkeit von einer Drehzahl und einem Drehmoment der Brennkraftmaschine hinterlegt. Es kann dann stets betriebspunktabhängig ein Wert für den vorbestimmten, festgehaltenen Initialwert aus dem Kennfeld ausgelesen werden.

Es wird auch eine Ausführungsform des Verfahrens bevorzugt, die sich dadurch auszeichnet, dass das überschreibbare Kennfeld in vorbestimmten Betriebszuständen des Abgasnachbehandlungssystems, oder in vorbestimmten Betriebszuständen einer mit dem Abgasnachbehandlungssystem wirkverbundenen, insbesondere abgaserzeugenden Einrichtung, nicht mit Daten beschrieben wird.

Dies hat den Vorteil, dass das überschreibbare Kennfeld nicht bedatet wird, wenn Betriebszustände auftreten, in denen keine sinnvolle oder realistische Bestimmung des Alterungszustands des SCR-Katalysators möglich ist, selbst wenn dieser sich in einem stationären Zustand befindet. Die vorbestimmten Betriebszustände werden bevorzugt entsprechend ausgewählt.

Es ist möglich, dass gleichwohl auch in solchen vorbestimmten Betriebszuständen eine Veränderung der Adaptionsgröße vorgenommen wird, sofern stationäre Bedingungen an dem SCR-Katalysator vorliegen, wobei die veränderten Werte der Adaptionsgröße dann aber nicht in dem überschreibbaren Kennfeld hinterlegt werden. In solchen Betriebszuständen wird dann die Dosiereinrichtung zwar auf der Grundlage der veränderten Bestimmungsgröße angesteuert, es folgt aber keine Hinterlegung, also Abspeicherung eines entsprechenden Werts, um eine Fehlanpassung des Lernkennfelds zu verhindern.

Alternativ ist es auch möglich, dass jedenfalls in manchen solcher vorbestimmten Betriebszustände keine Anpassung der Adaptionsgröße erfolgt, sodass das Abgasnachbehandlungssystem dann mit konstant gehaltener Bestimmungsgröße betrieben wird.

Ein solcher vorbestimmter Betriebszustand ist beispielsweise gegeben, wenn ein Sensor zur Erfassung eines Hochdrucks in einem gemeinsamen Hochdruckspeicher, der einer Mehrzahl von Injektoren zugeordnet ist, nämlich ein sogenannter Raildruck-Sensor, ausfällt. In diesem Fall wird die Drehmoment-Berechnung für eine Brennkraftmaschine ungenau, und die Berechnung einer Soll-Stickoxidkonzentration auf Basis des fehlerhaft bestimmten, aktuellen Betriebszustands liefert falsche Werte. In diesem Fall erfolgt bevorzugt kein Hinterlegen von Daten in dem überschreibbaren Kennfeld. Es kann dann insbesondere auch eine Veränderung der Adaptionsgröße unterbunden werden.

Ein weiterer solcher vorbestimmter Betriebszustand besteht dann, wenn ein Drehzahlsensor einer Brennkraftmaschine ausfällt. Es wird dann typischerweise auf einen Nockenwellensensor umgeschaltet, was zu Ungenauigkeiten in einer Bestimmung eines Spritzbeginns von Injektoren führt, und somit zu einer geänderten Verbrennung in Brennräumen der Brennkraftmaschine, und zu geänderten Emissionswerten. In diesem Fall wird vorzugsweise weiterhin die Adaptionsgröße verändert, jedoch werden die veränderten Werte nicht in dem überschreibbaren Kennfeld abgespeichert.

Auch dann, wenn eine Abgasrückführung für die Brennkraftmaschine wegen Übertemperatur abgeschaltet wird, was zu einer erhöhten Stickoxid-Rohemission führt, wird zwar die Adaption weiterhin durchgeführt, jedoch werden keine Daten in dem Lernkennfeld gespeichert.

Auch im Fall erhöhter Kohlenwasserstoffemissionen, beispielsweise aufgrund eines Kaltstarts einer Brennkraftmaschine oder einer aktiven Regeneration eines Partikelfilters, erfolgt bevorzugt keine Hinterlegung von Daten in dem überschreibbaren Kennfeld, da solche Betriebszustände typischerweise von einem Katalysators-Modell nicht erfasst werden.

Als Triggerereignis oder auslösendes Ereignis für die Veränderung des Prozessparameters in der ersten Betriebsart der Brennkraftmaschine wird vorzugsweise ein durch die Alterungserkennung erkannter Durchbruch des SCR-Katalysators verwendet. Alternativ oder zusätzlich ist es möglich, dass eine Veränderung der Adaptionsgröße oder der Daten in dem überschreibbaren Kennfeld, insbesondere dem Lernkennfeld, zu einer höheren Stickoxid-Konzentration stromabwärts des SCR-Katalysators hin als auslösendes Ereignis oder Triggerereignis für die Veränderung des Prozessparameters verwendet wird. Insofern wird vorzugsweise eine Veränderung des überschreibbaren Kennfelds überwacht, wobei es möglich ist, dass ein Neueintrag in das Lernkennfeld oder eine Veränderung desselben in Richtung einer höheren Stickoxid-Konzentration stromabwärts des SCR-Katalysators eine Veränderung des Prozessparameters in Richtung einer verringerten Stickoxid-Rohemission in der ersten Betriebsart der Brennkraftmaschine auslöst.

Dabei wird auch in der ersten Betriebsart der Brennkraftmaschine vorzugsweise das überschreibbare Kennfeld angepasst und die Bestimmungsgröße verändert. Die veränderte Bestimmungsgröße wird aber nicht zur Emissionsregelung herangezogen, sondern quasi nur passiv berechnet und gegebenenfalls gespeichert. Vielmehr erfolgt die Emissionsregelung auf der Grundlage der unveränderten Bestimmungsgröße, insbesondere auf der Grundlage eines konstant gehaltenen Initialwerts der Bestimmungsgröße.

In der zweiten Betriebsart der Brennkraftmaschine wird dagegen die veränderte Bestimmungsgröße zur Emissionsregelung herangezogen. Dabei hat die vorhergehende Anpassung oder Veränderung der Bestimmungsgröße an die Alterung des SCR-Katalysators in der ersten Betriebsart, die jedoch nicht zur Emissionsregelung herangezogen wird, den Vorteil, dass bei einem Umschalten der Brennkraftmaschine von der ersten Betriebsart in die zweite Betriebsart sofort alterungsangepasste Werte für die veränderte Bestimmungsgröße zur Emissionsregelung zur Verfügung stehen.

Die Aufgabe wird auch gelöst, indem eine Steuereinrichtung für ein System mit einer Brennkraftmaschine und einem Abgasnachbehandlungssystem mit einem SCR-Katalysator geschaffen wird. Dabei ist die Steuereinrichtung eingerichtet zur Ansteuerung der Brennkraftmaschine auf der Grundlage mindestens eines eine Stickoxid-Rohemission beeinflussenden Prozessparameters, wobei die Steuereinrichtung eingerichtet ist zur Durchführung einer Alterungserkennung für den SCR-Katalysator, und, in einer ersten Betriebsart der Brennkraftmaschine, zur Veränderung des mindestens einen Prozessparameters in Richtung einer verringerten Stickoxid-Rohemission, wenn eine Alterung des SCR-Katalysators erkennt wird. Die Steuereinrichtung ist weiter eingerichtet zur Ansteuerung der Brennkraftmaschine auf der Grundlage des mindestens einen veränderten Prozessparameters. Die Steuereinrichtung ist bevorzugt eingerichtet zur Durchführung eines Verfahrens nach einer der zuvor beschriebenen Ausführungsformen. In Zusammenhang mit der Steuereinrichtung ergeben sich insbesondere die Vorteile, die bereits in Zusammenhang mit dem Verfahren erläutert wurden.

Die Steuereinrichtung kann als dem Abgasnachbehandlungssystem zugeordnetes Steuergerät ausgebildet sein, welches dann vorzugsweise zum Zwecke der Ansteuerung der Brennkraftmaschine mit einem Steuergerät derselben wirkverbindbar ist, beispielsweise über eine hierfür geeignete Schnittstelle.

Alternativ ist es möglich, dass die Steuereinrichtung als Steuergerät der Brennkraftmaschine, insbesondere als zentrales Steuergerät der Brennkraftmaschine (Engine Control Unit - ECU) ausgebildet ist, oder dass das zentrale Steuergerät der Brennkraftmaschine die Funktionalität der Steuereinrichtung übernimmt.

Es ist auch möglich, dass die Steuereinrichtung eine Mehrzahl verschiedener Steuergeräte aufweist, welche verschiedene Teilfunktionen der Steuereinrichtung übernehmen, wobei die Steuergeräte miteinander kommunizieren und insbesondere - vorzugsweise über Schnittstellen - miteinander wirkverbunden sind.

Es ist möglich, dass das Verfahren fest in eine elektronische Struktur, insbesondere eine Hardware, der Steuereinrichtung implementiert ist. Alternativ oder zusätzlich ist es möglich, dass ein Computerprogrammprodukt in die Steuereinrichtung geladen ist, welches maschinenlesbare Anweisungen aufweist, aufgrund derer eine Ausführungsform des Verfahrens durchführbar ist, wenn das Computerprogrammprodukt auf der Steuereinrichtung läuft.

In diesem Zusammenhang wird auch ein Computerprogrammprodukt bevorzugt, welches maschinenlesbare Anweisungen aufweist, aufgrund derer ein Verfahren nach einer der zuvor beschriebenen Ausführungsformen durchführbar ist, wenn das Computerprogrammprodukt auf einer Recheneinrichtung, insbesondere einer Steuereinrichtung, besonders bevorzugt einem Steuergerät einer Brennkraftmaschine, läuft.

Zur Erfindung gehört auch ein Datenträger, welcher ein solches Computerprogramm aufweist.

Die Aufgabe wird auch gelöst, indem ein Abgasnachbehandlungssystem geschaffen wird, welches wenigstens einen SCR-Katalysator und eine Steuereinrichtung nach einem der zuvor beschriebenen Ausführungsbeispiele aufweist. In Zusammenhang mit dem Abgasnachbehandlungssystem ergeben sich insbesondere die Vorteile, die bereits in Zusammenhang mit dem Verfahren und der Steuereinrichtung erläutert wurden.

Das Abgasnachbehandlungssystem weist außerdem vorzugsweise eine Dosiereinrichtung für ein Reduktionsmittel oder ein Reduktionsmittelvorläuferprodukt auf, wobei die Dosiereinrichtung stromaufwärts des SCR-Katalysators vorgesehen ist. Die Steuereinrichtung ist vorzugsweise mit der Dosiereinrichtung wirkverbunden.

Weiterhin weist das Abgasnachbehandlungssystem bevorzugt einen ersten Stickoxid-Sensor auf, der stromabwärts eines Anschlusses des Abgasnachbehandlungssystems zu einem Motorblock einer Brennkraftmaschine und stromaufwärts des SCR-Katalysators sowie bevorzugt stromaufwärts der Dosiereinrichtung angeordnet ist. Das Abgasnachbehandlungssystem weist vorzugsweise einen zweiten Stickoxid-Sensor auf, welcher stromabwärts des SCR-Katalysators angeordnet ist. Die Steuereinrichtung ist vorzugsweise mit dem ersten Stickoxid-Sensor und/oder mit dem zweiten Stickoxid-Sensor wirkverbunden.

Das Abgasnachbehandlungssystem weist bevorzugt eine Ermittlungseinrichtung zur Ermittlung einer Stickoxid-Rohemission auf. Bei der Ermittlungseinrichtung kann es sich um den ersten Stickoxid-Sensor oder um ein mit dem ersten Stickoxidsensor verbundenes Ermittlungsmittel handeln, welches ein Signal des ersten Stickoxid-Sensors auswertet. Es ist aber auch möglich, dass es sich bei der Ermittlungseinrichtung um ein Ermittlungsmittel handeln, welches die Stickoxid-Rohemission auf der Grundlage eines Modells oder einer Simulation insbesondere aus Betriebsparametern der Brennkraftmaschine berechnet.

Das Abgasnachbehandlungssystem weist außerdem bevorzugt eine Ermittlungseinrichtung zur Ermittlung einer Stickoxid-Emission stromabwärts des SCR-Katalysators auf. Hierbei kann es sich um den zweiten Stickoxid-Sensor handeln, oder aber um ein Ermittlungsmittel, welches mit dem zweiten Stickoxid-Sensor wirkverbunden ist, um ein Messsignal des zweiten Stickoxid-Sensors auszuwerten. Alternativ oder zusätzlich ist es auch möglich, dass die Ermittlungseinrichtung als Ermittlungsmittel ausgebildet ist, welches die Stickoxid-Emission stromabwärts des SCR-Katalysators anhand eines Modells oder einer Simulation der Brennkraftmaschine, der Dosiereinrichtung und des SCR-Katalysators insbesondere auf der Grundlage von Betriebsparametern derselben, berechnet.

Die Aufgabe wird schließlich auch gelöst, indem eine Brennkraftmaschine geschaffen wird, welche eine Steuereinrichtung nach einem der zuvor beschriebenen Ausführungsbeispiele aufweist. Alternativ oder zusätzlich weist die Brennkraftmaschine bevorzugt ein Abgasnachbehandlungssystem nach einem der zuvor beschriebenen Ausführungsbeispiele auf, oder ist mit einem solchen Abgasnachbehandlungssystem wirkverbunden.

In Zusammenhang mit der Brennkraftmaschine ergeben sich insbesondere die Vorteile, die bereits in Zusammenhang mit dem Verfahren, der Steuereinrichtung und dem Abgasnachbehandlungssystem erläutert wurden.

Die Brennkraftmaschine ist vorzugsweise als Hubkolbenmotor ausgebildet. Es ist möglich, dass die Brennkraftmaschine zum Antrieb eines Personenkraftwagens, eines Lastkraftwagens oder eines Nutzfahrzeugs eingerichtet ist. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor, als Benzinmotor, als Gasmotor zum Betrieb mit Erdgas, Biogas, Sondergas oder einem anderen geeigneten Gas, ausgebildet. Insbesondere wenn die Brennkraftmaschine als Gasmotor ausgebildet ist, ist sie für den Einsatz in einem Blockheizkraftwerk zur stationären Energieerzeugung geeignet.

Die Beschreibung des Verfahrens einerseits sowie der Steuereinrichtung, des Abgasnachbehandlungssystems und der Brennkraftmaschine andererseits sind komplementär zueinander zu verstehen. Insbesondere sind Verfahrensschritte, die explizit oder implizit in Zusammenhang mit der Steuereinrichtung, dem Abgasnachbehandlungssystem und/oder der Brennkraftmaschine beschrieben wurden, bevorzugt einzeln oder miteinander kombiniert Schritte einer bevorzugten Ausführungsform des Verfahrens. Merkmale der Steuereinrichtung, des Abgasnachbehandlungssystems und/oder der Brennkraftmaschine, die explizit oder implizit in Zusammenhang mit dem Verfahren erläutert wurden, sind bevorzugt einzeln oder miteinander kombiniert Merkmale eines bevorzugten Ausführungsbeispiels der Steuereinrichtung, des Abgasnachbehandlungssystems und/oder der Brennkraftmaschine. Das Verfahren zeichnet sich bevorzugt durch wenigstens einen Verfahrensschritt aus, der durch wenigstens ein Merkmal eines erfindungsgemäßen oder bevorzugten Ausführungsbeispiels der Steuereinrichtung, des Abgasnachbehandlungssystems und/oder der Brennkraftmaschine bedingt ist. Die Steuereinrichtung, das Abgasnachbehandlungssystem und/oder die Brennkraftmaschine zeichnet/zeichnen sich bevorzugt durch wenigstens ein Merkmal aus, welches durch wenigstens einen Schritt einer erfindungsgemäßen oder bevorzugten Ausführungsform des Verfahrens bedingt ist.

Die Erfindung wird im Folgenden anhand der Zeichnung näher erläutert. Dabei zeigen:
- Figur 1: eine schematische Darstellung eines Ausführungsbeispiels einer Brennkraftmaschine mit einem Abgasnachbehandlungssystem;
- Figur 2: eine schematische Darstellung einer Ausführungsform des Verfahrens;
- Figur 3: eine schematische, diagrammatische Darstellung eines Alterungsverhaltens eines SCR-Katalysators sowie einer prinzipiellen Funktionsweise einer Ausführungsform des Verfahrens zur Alterungserkennung;
- Figur 4: eine schematische Darstellung einer ersten Ausführungsform des Verfahrens zur Alterungserkennung;
- Figur 5: eine schematische Darstellung eines Details einer Ausführungsform des Verfahrens zur Alterungserkennung, und
- Figur 6: eine weitere Detaildarstellung einer Ausführungsform des Verfahrens zur Alterungserkennung.

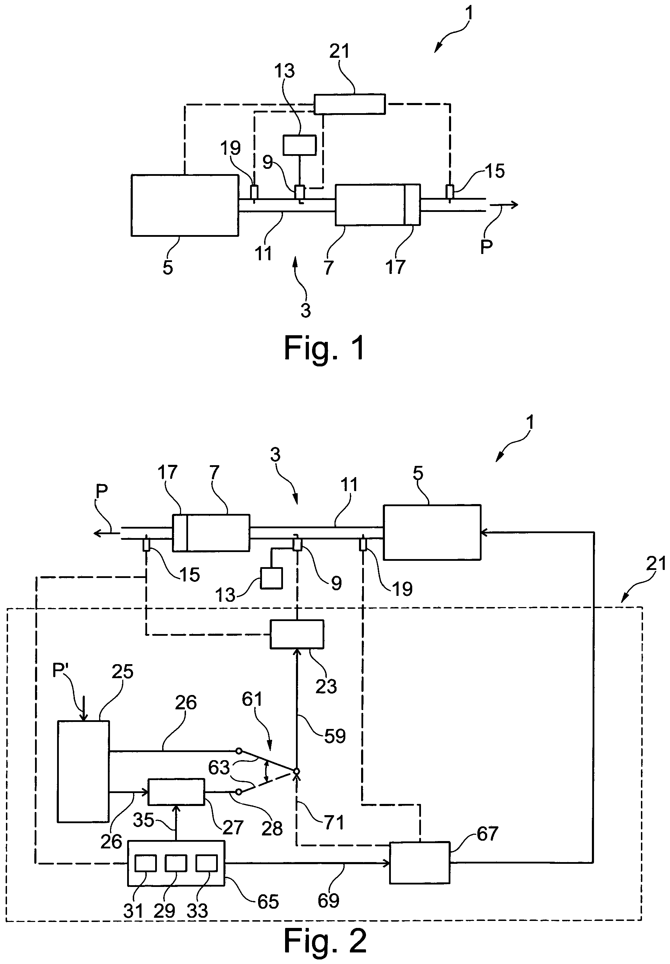

**Fig. 1** zeigt eine schematische Darstellung eines Ausführungsbeispiels einer Brennkraftmaschine 1, die ein Abgasnachbehandlungssystem 3 aufweist. Die Brennkraftmaschine 1 weist einen Motorblock 5 auf, wobei Abgas aus dem Motorblock 5 entlang des Abgasnachbehandlungssystems 3 und - wie hier schematisch durch einen Pfeil P angedeutet - weiter zu einem nicht dargestellten Auslass oder Auspuff strömen kann.

Das Abgasnachbehandlungssystem 3 weist einen Katalysator zur selektiven katalytischen Reduktion von Stickoxiden, nämlich einen SCR-Katalysator 7 auf. Stromaufwärts des SCR-Katalysators 7 ist eine Dosiereinrichtung 9 angeordnet, die eingerichtet ist zur Eindosierung eines Reduktionsmittels oder eines Reduktionsmittelvorläuferprodukts, insbesondere einer Harnstoff-Wasser-Lösung. Das Abgasnachbehandlungssystem 3 weist außerdem einen Abgaspfad 11 auf, durch welchen das Abgas strömt, und in dem die Dosiereinrichtung 9 sowie der SCR-Katalysator 7 angeordnet sind.

Die Dosiereinrichtung 9 ist mit einem Reservoir 13 für das Reduktionsmittel oder das Reduktionsmittelvorläuferprodukt in Fluidverbindung.

Optional ist vorgesehen, dass stromabwärts des SCR-Katalysators 7, insbesondere unmittelbar an diesen anschließend, ein Oxidationskatalysator 17 als Sperrkatalysator angeordnet ist, welcher eingerichtet ist, um aus dem SCR-Katalysator 7 austretendes Reduktionsmittel, insbesondere Ammoniak, zu oxidieren, insbesondere zu Stickoxiden, und so einen Reduktionsmittelaustritt aus dem SCR-Katalysator 7 beziehungsweise aus dem Abgasnachbehandlungssystem 3 zu reduzieren oder zu verhindern.

Entlang des Abgaspfads 11 ist ein erster Stickoxid-Sensor 19 stromabwärts des Motorblocks 5 und stromaufwärts des SCR-Katalysators 7 sowie bevorzugt auch stromaufwärts der Dosiereinrichtung 9 angeordnet, wobei durch den ersten Stickoxid-Sensor 19 Stickoxid-Rohemissionen der Brennkraftmaschine 1 erfassbar sind.

Stromabwärts des SCR-Katalysators 7 und vorzugsweise stromabwärts des Oxidationskatalysators 17 ist ein zweiter Stickoxid-Sensor 15 angeordnet, der eingerichtet ist zur Erfassung einer Stickoxid-Konzentration im Abgas stromabwärts des SCR-Katalysators 7. Dabei ist der zweite Stickoxid-Sensor 15 zugleich auch geeignet für eine Durchbrucherkennung des SCR-Katalysators 7, weil sein Messsignal empfindlich ist auf einen Durchbruch. Ist der Oxidationskatalysator 17 nicht vorgesehen, gelangt im Zustand des Durchbruchs Reduktionsmittel aus dem SCR-Katalysator 7 in den Bereich des zweiten Stickoxid-Sensors 15, wobei dieser eine Querempfindlichkeit zwischen Stickoxiden einerseits und Reduktionsmittel, insbesondere Ammoniak, andererseits aufweist. Das Messsignal des zweiten Stickoxid-Sensors 15 steigt also auch, wenn eine Reduktionsmittelkonzentration, insbesondere eine Ammoniakkonzentration, im Abgas an der Messposition des zweiten Stickoxid-Sensors 15 ansteigt. Ist dagegen ein Oxidationskatalysator 17 vorgesehen, steigt im Fall eines Durchbruchs des SCR-Katalysators 7 das Messsignal des zweiten Stickoxid-Sensors 15 deswegen, weil das durch den SCR-Katalysator 7 schlupfende Reduktionsmittel, insbesondere Ammoniak, in dem Oxidationskatalysator 17 oxidiert wird, insbesondere zu Stickoxiden, die dann unmittelbar durch den zweiten Stickoxid-Sensor 15 als erhöhtes Messsignal erfasst werden.

Es ist eine Steuereinrichtung 21 vorgesehen, die insbesondere mit dem ersten Stickoxid-Sensor 19 und bevorzugt mit dem zweiten Stickoxid-Sensor 15 zur Erfassung der Messsignale zumindest eines dieser Sensoren wirkverbunden ist. Die Steuereinrichtung 21 ist außerdem bevorzugt mit der Dosiereinrichtung 9 zu deren Ansteuerung, insbesondere zur Vorgabe einer von der Dosiereinrichtung 9 in den Abgaspfad 11 eingedüsten Menge an Reduktionsmittel, wirkverbunden. Weiterhin ist die Steuereinrichtung 21 bevorzugt mit dem Motorblock 5 wirkverbunden, insbesondere zur Erfassung von Betriebsparametern des Motorblocks 5 und/oder zur Ansteuerung desselben.

Die Steuereinrichtung ist insbesondere eingerichtet, um die Brennkraftmaschine 1 und hier konkret insbesondere den Motorblock 5 auf der Grundlage mindestens eines eine Stickoxid-Rohemission beeinflussenden Prozessparameters anzusteuern. Weiterhin ist die Steuereinrichtung eingerichtet zur Durchführung einer Alterungserkennung für den SCR-Katalysator 7, und, in einer ersten Betriebsart der Brennkraftmaschine 1, zur Veränderung des mindestens einen Prozessparameters in Richtung einer verringerten Stickoxid-Rohemission, wenn eine Alterung des SCR-Katalysators 7 erkannt wird. Die Steuereinrichtung 21 ist eingerichtet zur Ansteuerung der Brennkraftmaschine 1, insbesondere des Motorblocks 5, auf der Grundlage des mindestens einen veränderten Prozessparameters. Insbesondere ist die Steuereinrichtung 21 eingerichtet zur Durchführung einer der zuvor beschriebenen Ausführungsformen des erfindungsgemäßen Verfahrens.

**Fig. 2** zeigt eine schematische Darstellung einer Ausführungsform des Verfahrens. Gleiche und funktionsgleiche Elemente sind mit gleichen Bezugszeichen versehen, sodass insofern auf die vorangegangene Beschreibung verwiesen wird. Dabei wird insbesondere die Funktionsweise der Steuereinrichtung 21 näher erläutert. Die Steuereinrichtung 21 weist ein Emissionsregelungsmittel 23 auf, welches eingerichtet ist zur Regelung der Stickoxid-Emissionen, insbesondere zur Regelung einer Stickoxid-Konzentration, stromabwärts des SCR-Katalysators 7. Hierzu ist das Emissionsregelungsmittel 23 mit dem zweiten Stickoxid-Sensor 15 einerseits und mit der Dosiereinrichtung 9 andererseits wirkverbunden. Über die Wirkverbindung mit dem zweiten Stickoxid-Sensor 15 ist insbesondere ein Istwert für die Stickoxid-Konzentration stromabwärts des SCR-Katalysators 7 durch das Emissionsregelungsmittel 23 erfassbar. Dem Emissionsregelungsmittel 23 wird ein Sollwert 59 zugeführt, wobei das Emissionsregelungsmittel 23 eingerichtet ist, um eine Soll/Ist-Abweichung der Stickoxid-Konzentration stromabwärts des SCR-Katalysators 7 zu bestimmen, und die Dosiereinrichtung 9 abhängig von der Soll/Ist-Abweichung anzusteuern, um die Stickoxid-Konzentration stromabwärts des SCR-Katalysators 7 auf den Sollwert 59 zu regeln.

In der ersten Betriebsart ist eine hier schematisch dargestellte Schalteinrichtung 61 in einer ersten, hier mittels eines durchgezogenen Schaltersymbols 63 dargestellten Funktionsstellung angeordnet, wobei dem Emissionsregelungsmittel 23 als Sollwert 59 eine Bestimmungsgröße 26 zugeführt wird, die aus einem ersten Kennfeld 25 abhängig von hier durch einen zweiten Pfeil P' dargestellten Betriebsparametern der Brennkraftmaschine 1, insbesondere einer momentanen Drehzahl und einem momentanen Drehmoment, ausgelesen wird. Das erste Kennfeld 25 umfasst dabei konstante, festgehaltene Werte der Bestimmungsgröße 26, die im Betrieb der Brennkraftmaschine 1 nicht verändert werden.

Die Steuereinrichtung 21 weist ein Alterungserkennungsmittel 65 auf, welches eingerichtet ist zur Durchführung einer Alterungserkennung für den SCR-Katalysator 7. Hierzu ist das Alterungserkennungsmittel 65 insbesondere mit dem zweiten Stickoxid-Sensor 15 wirkverbunden. Dabei weist das Alterungserkennungsmittel 65 bevorzugt ein Stationärerkennungsglied 33 sowie ein Durchbrucherkennungsglied 31 auf, was im Folgenden noch näher erläutert werden wird. Außerdem weist das Alterungserkennungsmittel 65 bevorzugt ein Berechnungsglied 29 auf, welches ebenfalls noch näher erläutert werden wird, und welches eingerichtet ist, um ein Rechenergebnis 35 zu berechnen, welches einem Veränderungsglied 27 zugeführt wird. In dem Veränderungsglied 27 wird die aus dem ersten Kennfeld 25 ausgelesene Bestimmungsgröße 26 mit dem Rechenergebnis 35 verknüpft, oder das Veränderungsglied 27 trifft eine Entscheidung zwischen der Bestimmungsgröße 26 und dem Rechenergebnis 35, was im Folgenden noch näher erläutert wird. Jedenfalls resultiert aus dem Veränderungsglied 27 eine veränderte Bestimmungsgröße 28.

In der zweiten Betriebsart der Brennkraftmaschine 1 wird die Schalteinrichtung 61 in einer zweiten Funktionsstellung angeordnet, welche hier durch eine gestrichelte Darstellung des Schaltersymbols 63 dargestellt ist. Zugleich ist die Schaltbarkeit der Schalteinrichtung 61 von der ersten in die zweite Funktionsstellung und zurück durch einen Doppelpfeil angedeutet. In der zweiten Funktionsstellung wird die veränderte Bestimmungsgröße 28 dem Emissionsregelungsmittel 23 als Sollwert 59 zugeführt.

Die Steuerungseinrichtung 21 weist außerdem ein Rohemissions-Regelungsmittel 67 auf, welches eingerichtet ist, um die Stickoxid-Rohemissionen der Brennkraftmaschine 1 und insbesondere des Motorblocks 5 zu regeln. Hierzu ist das Rohemissions-Regelungsmittel 67 mit dem ersten Stickoxid-Sensor 19 wirkverbunden, dessen Messwert als Istwert der Stickoxid-Rohemission herangezogen wird. Das Rohemissions-Regelungsmittel 67 weist im Neuzustand der Brennkraftmaschine 1 und/oder im Neuzustand des SCR-Katalysators 7 einen Sollwert für die Stickoxid-Rohemissionen auf, welcher in Hinblick auf einen Verbrauch der Brennkraftmaschine 1 optimiert und somit vergleichsweise hoch ist. Hiermit wird insbesondere die Alterungsreserve des neuwertigen SCR-Katalysators 7 ausgenutzt, um einen möglichst günstigen Verbrauch der Brennkraftmaschine 1 zu erhalten.

Mittels des Alterungserkennungsmittels 65 wird eine Alterungserkennung für den SCR-Katalysator 7 durchgeführt. Insbesondere wird eine Alterung des SCR-Katalysators 7 erkannt, wenn das Durchbrucherkennungsglied 31 einen Durchbruch des SCR-Katalysators 7 erkennt, und/oder wenn eine Adaptionsgröße oder die Adaptionsgröße bestimmende Daten in einem überschreibbaren Kennfeld, insbesondere einem Lernkennfeld, des Alterungserkennungsmittels 65 in Richtung einer höheren Stickoxid-Konzentration stromabwärts des SCR-Katalysators 7 geändert wird/werden. In einem solchen Fall sendet das Alterungserkennungsmittel 65 ein Signal 69, das auch als virtuelles Signal, insbesondere als Bit oder Bitmuster, ausgebildet sein kann, an das Rohemissions-Regelungsmittel 67, worauf das Rohemissions-Regelungsmittel 67 veranlasst wird, den Sollwert für die Stickoxid-Rohemissionen abzusenken. Vorzugsweise senkt das Rohemissions-Regelungsmittel 67 den Sollwert für die Stickoxid-Rohemissionen inkrementell, insbesondere um ein konstantes Inkrement, ab, insbesondere jedes Mal, wenn es das eine Alterung des SCR-Katalysators 7 anzeigende Signal 69 von dem Alterungserkennungsmittel 65 erhält.

Aus dem Sollwert für die Stickoxid-Rohemissionen und dem als Istwert erhaltenen Messsignal des ersten Stickoxid-Sensors 19 berechnet das Rohemissions-Regelungsmittel 67 eine Soll-Ist-Abweichung für die Stickoxid-Rohemission, wobei es die Brennkraftmaschine 1, insbesondere den Motorblock 5, in Abhängigkeit von der Soll-Ist-Abweichung ansteuert, um die Stickoxid-Rohemissionen auf den momentanen Sollwert zu regeln. Dabei beeinflusst das Rohemissions-Regelungsmittel 67 vorzugsweise wenigstens einen Betriebsparameter der Brennkraftmaschine 1, um die Stickoxid-Rohemissionen zu regeln, besonders bevorzugt einen Betriebsparameter ausgewählt aus einer Gruppe bestehend aus einem Spritzbeginn, einem Ladedruck, einem Lambdawert, und einem Raildruck. Zusätzlich oder alternativ ist auch eine Beeinflussung wenigstens eines anderen geeigneten Betriebsparameters der Brennkraftmaschine 1, insbesondere des Motorblocks 5, durch das Rohemissions-Regelungsmittel 67 möglich.

In der ersten Betriebsart der Brennkraftmaschine 1 wird insgesamt also zugleich dem Emissionsregelungsmittel 23 ein konstanter Sollwert 59 in Form der aus dem ersten Kennfeld 25 ausgelesenen Bestimmungsgröße 26 zugeführt, wobei "konstant" hier bedeutet, dass dieser Sollwert, insbesondere die Bestimmungsgröße 26, nicht in Abhängigkeit von einer Alterung des SCR-Katalysators 7 beeinflusst oder verändert wird. Dem steht nicht entgegen, dass die Bestimmungsgröße 26 und damit der Sollwert 59 betriebspunktabhängig aus dem Kennfeld 25 ausgelesen und insofern veränderlich ist.

Zugleich reagiert das System auf eine mittels des Alterungserkennungsmittels 65 erkannte Alterung des SCR-Katalysators dadurch, dass die Stickoxid-Rohemissionen abgesenkt werden.

Die erste Betriebsart wird bevorzugt solange beibehalten, bis der Sollwert für die Stickoxid-Rohemission eine vorbestimmte Stickoxid-Minimalrohemission erreicht oder unterschreitet. Unterschreitet der Sollwert für die Stickoxid-Rohemission die vorbestimmte Stickoxid-Minimalrohemission, ist bevorzugt vorgesehen, dass der Sollwert auf die Stickoxid-Minimalrohemission nach unten begrenzt, insbesondere auf dieses Niveau angehoben wird. Die vorbestimmte Stickoxid-Minimalrohemission ist bevorzugt so bestimmt, dass ein Einhalten anderer Emissionsgrenzwerte und/oder ein stabiler Betrieb der Brennkraftmaschine auf dem Niveau der Stickoxid-Minimalrohemission noch gewährleistet werden kann/können, wobei unterhalb des Stickoxid-Minimalrohemission zu befürchten wäre, dass wenigstens ein anderer Emissionsgrenzwert nicht mehr eingehalten werden kann, oder dass der Betrieb der Brennkraftmaschine 1 instabil wird.

Die erste Betriebsart endet bevorzugt insbesondere dann, wenn eine weitere Absenkung der Stickoxid-Rohemissionen aus übergeordneten Gründen, insbesondere mit Blick auf andere Emissionsgrenzwerte und/oder einen stabilen Betrieb der Brennkraftmaschine 1 nicht mehr zielführend ist.

Die vorbestimmte Stickoxid-Minimalrohemission ist vorzugsweise als konstanter Wert in dem Rohemissions-Regelungsmittel 67 hinterlegt.

In dem Fall, dass der Sollwert für die Stickoxid-Rohemission die vorbestimmte Stickoxid-Minimalrohemission erreicht oder unterschreitet, sendet das Rohemissions-Regelungsmittel 67 vorzugswiese ein zweites Signal 71 an die Schalteinrichtung 61, wodurch diese von ihrer ersten Funktionsstellung in die zweite Funktionsstellung geschaltet wird. Dadurch wird zugleich die Brennkraftmaschine 1 in ihre zweite Betriebsart geschaltet.

In der zweiten Betriebsart wird nun bevorzugt der Sollwert für die Stickoxid-Rohemissionen in dem Rohemissions-Regelungsmittel 67 konstant gehalten, besonders bevorzugt auf dem Niveau der vorbestimmten Stickoxid-Minimalrohemission.

Zugleich wird dem Emissionsregelungsmittel 23 als Sollwert 59 die veränderte Bestimmungsgröße 28 zugeführt, welche durch das Veränderungsglied 27 bestimmt wird.

Einer weiteren Alterung des SCR-Katalysators 7 wird also nun nicht mehr durch Absenkung der Stickoxid-Rohemissionen Rechnung getragen, sondern durch Veränderung des Sollwerts 59 für das Emissionsregelungsmittel 23.

Es ist im Übrigen bevorzugt vorgesehen, dass nach einem Tausch des SCR-Katalysators 7 gegen einen neuwertigen SCR-Katalysator 7, die veränderte Bestimmungsgröße 28 schrittweise zurückgeführt wird, insbesondere auf das Niveau der Bestimmungsgröße 26, wobei das Alterungserkennungsmittel 65 entsprechend eingerichtet ist. Vorzugsweise ist das Alterungserkennungsmittel 65 zusätzlich eingerichtet, um in einem solchen Fall ein geeignetes Signal an das Rohemissions-Regelungsmittel 67 zu übermitteln, sodass die Stickoxid-Rohemissionen durch dieses wieder angehoben werden können, insbesondere auf das Niveau der neuwertigen Brennkraftmaschine 1 oder des neuwertigen SCR-Katalysators 7. In einem solchen Fall steuert bevorzugt das Rohemissions-Regelungsmittel 67 auch die Schalteinrichtung 61 wieder an, sodass diese von ihrer zweiten Funktionsstellung in ihre erste Funktionsstellung zurückgestellt wird, woraufhin dann das Emissionsregelungsmittel 23 wiederum mit der konstanten Bestimmungsgröße 26 als Sollwert 59 angesteuert wird.

Es kann auf diese Weise nach einem Tausch des SCR-Katalysators 7 gegen einen neuwertigen SCR-Katalysator 7 wiederum ein Betrieb der Brennkraftmaschine 1 eingestellt werden, der einem Neuzustand entspricht. Die Vorgehensweise in Zusammenhang mit der Alterungserkennung startet dann quasi von neuem.

Es zeigt sich, dass die Brennkraftmaschine 1 auf der Grundlage des eine Stickoxid-Rohemission beeinflussenden Prozessparameters, nämlich des Sollwerts für die Stickoxid-Rohemission in dem Rohemissions-Regelungsmittel 67 angesteuert wird, wobei mittels des Alterungserkennungsmittels 65 eine Alterungserkennung für den SCR-Katalysator 7 durchgeführt wird, wobei, wenn eine Alterung des SCR-Katalysators 7 erkennt wird, der mindestens eine Prozessparameter in Richtung einer verringerten Stickoxid-Rohemission verändert wird, indem der Sollwert für die Stickoxid-Rohemission abgesenkt wird. Die Brennkraftmaschine 1, insbesondere der Motorblock 5, wird dann auf der Grundlage des veränderten mindestens einen Prozessparameters, nämlich mit dem abgesenkten Sollwert für die Stickoxid-Rohemission, angesteuert.

Der SCR-Katalysator 7 wird im Betrieb durch das Alterungserkennungsmittel 65 permanent auf eine Alterung überwacht.

Der mindestens eine Prozessparameter, nämlich der Sollwert für die Stickoxid-Rohemission, ist in einem initialen Betriebszustand bevorzugt in Richtung eines kraftstoffverbrauchsoptimalen Betriebs der Brennkraftmaschine eingestellt.

Wird eine Alterung erkannt, wird der mindestens eine Prozessparameter bevorzugt in Richtung einer Verringerung der Stickoxid-Rohemission verändert, wenn die Rohemission größer ist als eine vorbestimmte Stickoxid-Minimalrohemission, wobei die Veränderung des Prozessparameters beendet wird, wenn die Stickoxid-Rohemission größer ist als die vorbestimmte Stickoxid-Minimalrohemission und keine Alterung mehr erkannt wird, oder wenn die Stickoxid-Rohemission das Niveau der Stickoxid-Minimalrohemission erreicht oder unterschreitet.

Bevorzugt ist es vorgesehen, dass, wenn eine Alterung erkannt wird, der mindestens eine Prozessparameter konstant gehalten wird, wenn die Stickoxid-Rohemission das Niveau der vorbestimmten Stickoxid-Minimalrohemission erreicht oder unterschreitet.

Weiterhin ist vorgesehen, dass die Brennkraftmaschine 1 in eine zweite Betriebsart geschaltet wird, wenn die Stickoxid-Rohemission das Niveau der vorbestimmten Stickoxid-Minimalrohemission erreicht oder unterschreitet, wobei eine Emissionsregelung mittels des Emissionsregelungsmittels 23 in der zweiten Betriebsart auf der Grundlage einer durch die Alterungserkennung, nämlich das Alterungserkennungsmittel 65, veränderten Bestimmungsgröße 28 für die Stickoxid-Konzentration stromabwärts des SCR-Katalysators 7 durchgeführt wird.

Im Folgenden wird die Funktionsweise der Alterungserkennung und damit insbesondere die Funktionsweise des Alterungserkennungsmittels 65 näher erläutert:

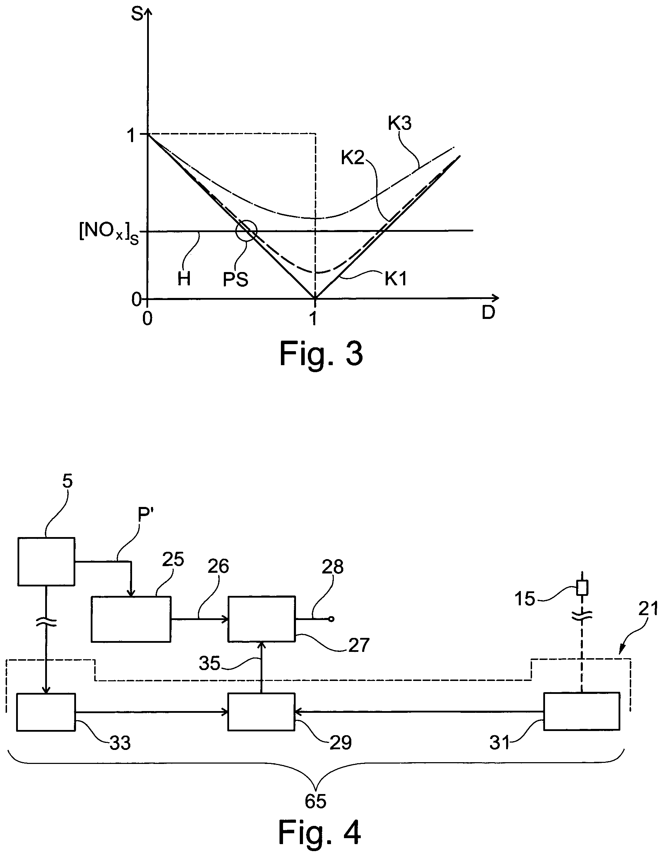

**Fig. 3** zeigt eine schematische, diagrammatische Darstellung der Funktionsweise des Verfahrens zur Alterungserkennung. Dabei ist hier auf einer vertikalen Achse des Diagramms ein Messwert S des zweiten Stickoxid-Sensors 15 als Maß für eine kombinierte Stickoxid- und AmmoniacKonzentration im Abgas stromabwärts des SCR-Katalysators 7 aufgetragen, und zwar bezogen auf die Rohemissionen an Stickoxid des Motorblocks 5, sodass der Wert 1 auf der vertikalen Achse einem Zustand entspricht, in dem die Stickoxid-Rohemissionen des Motorblocks 5 vollständig durch den SCR-Katalysator 7 durchgelassen werden. Auf der horizontalen Achse ist eine Dosierrate D von Reduktionsmittel oder einem Reduktionsmittel-Vorläuferprodukt der Dosiereinrichtung 9 aufgetragen, und zwar bezogen auf einen Umsatz des Reduktionsmittels in dem SCR-Katalysator 7. Dabei entspricht hier der mit 1 gekennzeichnete Wert einem vollständigen Umsatz des insgesamt eingedüsten Reduktionsmittels an dem SCR-Katalysator 7.

Als horizontale Linie H ist in das Diagramm ein Stickoxid-Sollwert [NOₓ]_{S} eingetragen, der im Rahmen des Verfahrens als Bestimmungsgröße verwendet wird.

Eine erste, durchgezogene Kurve K1 zeigt das Verhalten eines idealen SCR-Katalysators 7. Ausgehend von einer verschwindenden Dosierrate, bei welcher kein Umsatz von Stickoxiden an dem SCR-Katalysator 7 erfolgt, sinkt der Messwert S des zweiten Stickoxid-Sensors 15 mit zunehmender Dosierrate, bis bei dem Wert 1 für die Dosierrate, also einem vollständigen Umsatz des Reduktionsmittels an dem SCR-Katalysator 7 eine vollständige Reduktion der Stickoxide in dem SCR-Katalysator 7 gegeben ist, sodass auch das Signal des zweiten Stickoxid-Sensors 15 Null wird. Wird die Dosierrate über den Wert 1 hinaus erhöht, steigt das Messsignal des zweiten Stickoxid-Sensors 15 wieder an, weil nun nicht umgesetztes Reduktionsmittel durch den SCR-Katalysator 7 durchgelassen wird. Es besteht also insoweit ein Durchbruch des SCR-Katalysators 7, beziehungsweise es tritt ein Reduktionsmittel- oder Ammoniak-Schlupf auf. Aufgrund der Querempfindlichkeit des zweiten Stickoxid-Sensors 15 zwischen Stickoxiden einerseits und Ammoniak andererseits führt dies zu einem ansteigenden Signal S des zweiten Stickoxid-Sensors 15. In einem Fall, in welchem stromabwärts des SCR-Katalysators 7 ein Oxidationskatalysators 17 vorgesehen ist, wird insbesondere nicht umgesetztes Ammoniak zu Stickoxiden aufoxidiert, sodass hier der Messwert S bei Dosierraten größer 1 deswegen ansteigt, weil an dem zweiten Stickoxid-Sensor 15 Stickoxide erfasst werden, welche von dem Oxidationskatalysator 17 aus Ammoniak erzeugt werden.

Durch eine zweite, gestrichelte Kurve K2 ist grundsätzlich die Funktionsweise eines realen, neuwertigen SCR-Katalysators 7 dargestellt. Dieser weicht vom idealen Verhalten insoweit ab, als er insbesondere eine maximal erreichbare, von 100 % verschiedene Umsatzrate auch im Neuzustand aufweist, sodass letztlich nicht alle Stickoxide im Abgas tatsächlich reduziert werden, selbst wenn das eindosierte Reduktionsmittel an dem SCR-Katalysator 7 vollständig umgesetzt wird. Daher geht die gestrichelte Kurve K2 abweichend von der das Idealverhalten beschreibenden ersten, durchgezogenen Kurve K1 bei dem Wert 1 für die Dosierrate nicht zu Null.

Beiden Kurven K1, K2 ist jedoch gemeinsam, dass diese jeweils einen in einem Detail PS dargestellten Schnittpunkt mit dem Stickoxid-Sollwert [NOₓ]_{S} bei Werten der Dosierrate kleiner als 1 aufweisen. Eine Regelung der Stickoxid-Emissionen erfolgt nun bevorzugt so, dass die Dosierrate als Stellgröße so beeinflusst wird, dass das Messsignal des zweiten Stickoxid-Sensors 15 im Bereich dieses Schnittpunkts gehalten wird.

Durch eine strichpunktierte, dritte Kurve K3 ist das Verhalten eines gealterten SCR-Katalysators 7 dargestellt, der eine deutlich reduzierte maximale Umsatzrate aufweist. Es ist dann möglich, dass der maximale Umsatz so gering ist, dass selbst bei einer Dosierrate von 1 der Stickoxid-Sollwert [NOₓ]_{S} nicht erreicht wird, sodass die dritte Kurve K3 keinen Schnittpunkt mehr mit dem Sollwert und hier insbesondere mit der horizontalen Linie H aufweist. Es ist dann keine stabile Regelung der Stickoxid-Emissionen durch Variation der Dosierrate D mehr möglich, und es ergibt sich ein Durchbruch für den SCR-Katalysator 7.

Wird nun im Rahmen des Verfahrens ein Durchbruch für den SCR-Katalysator 7 erkannt, wird die Bestimmungsgröße zu höherer Stickoxid-Konzentration stromabwärts des SCR-Katalysators 7 hin verändert, was bedeutet, dass der Sollwert [NOₓ]_{S} erhöht wird. Dies bedeutet konkret mit Bezug auf das Diagramm von Figur 3, dass die horizontale Linie H nach oben parallel verschoben wird, und zwar bevorzugt solange, bis sich wiederum ein Schnittpunkt mit der dritten Kurve K3 einstellt. Es ist dann in der zweiten Betriebsart wieder eine stabile Regelung des SCR-Katalysators 7 möglich.

Anhand des Diagramms gemäß Figur 3 wird auch klar, weshalb in diesem Fall die tatsächlichen Stickoxid-Emissionen der Brennkraftmaschine 1 und insbesondere die tatsächlich auftretende Stickoxid-Konzentration im Abgas stromabwärts des SCR-Katalysators 7 sinken kann, obwohl der Sollwert erhöht wird. Dies liegt daran, dass der SCR-Katalysator 7 im Durchbruch letztlich undefinierte Stickoxid-Emissionen produziert, die keiner stabilen Emissionsregelung zugänglich sind. Wird dagegen wieder ein Schnittpunkt zwischen der horizontalen Linie H und der dritten Kurve K3 erreicht, kann wieder eine stabile Regelung erfolgen, sodass sich die Stickoxid-Konzentration stromabwärts des SCR-Katalysators 7 bei dem Stickoxid-Sollwert [NOₓ]_{S} einstellt. Dabei kann sie insbesondere im Vergleich zu dem Betriebszustand des SCR-Katalysators 7 im Durchbruch sinken, stellt sich aber bei einem im Vergleich zu dem vorhergehenden Stickoxid-Sollwert erhöhten Wert ein.

Wird aufgrund der nunmehr stabilen Regelung der Emissionen kein Durchbruch mehr erkannt, kann versuchsweise der Stickoxid-Sollwert [NOₓ]_{S} wieder abgesenkt werden, insbesondere kann also die horizontale Linie H wieder nach unten verschoben werden, um zu prüfen, ob die Erhöhung möglicherweise in dem Sinne zu hoch ausgefallen ist, dass auch bei einem niedrigeren Sollwert noch eine stabile Emissionsregelung möglich ist. Diese versuchsweise Erniedrigung kann insbesondere inkrementell solange durchgeführt werden, bis wiederum ein Durchbruch des SCR-Katalysators 7 erkannt wird. Ist dies der Fall, kann insbesondere ein letztes Änderungsinkrement rückgängig gemacht werden, sodass wiederum ein Schnittpunkt der horizontalen Linie H mit der dritten Kurve K3 gegeben und eine stabile Regelung möglich ist.

**Fig. 4** zeigt eine schematische Darstellung einer Ausführungsform des Verfahrens zur Alterungserkennung. Gleiche und funktionsgleiche Elemente sind mit gleichen Bezugszeichen versehen, sodass insofern auf die vorangegangene Beschreibung verwiesen wird.

Das Durchbrucherkennungsglied 31 ist mit dem zweiten Stickoxid-Sensor 15 wirkverbunden und eingerichtet, um einen Durchbruch des SCR-Katalysators 7 zu erkennen. Dementsprechend meldet es an das Berechnungsglied 29, ob ein Durchbruch erkannt wurde, oder nicht.

Das Stationärerkennungsglied 33 ist mit dem Motorblock 5 wirkverbunden, um zu erkennen, ob ein stationärer Betriebspunkt vorliegt. Es meldet an das Berechnungsglied 29, ob ein stationärer Betriebspunkt vorliegt, wobei es insbesondere prüft, ob Bedingungen vorliegen, unter denen sich auch der SCR-Katalysator 7 in einem stationären Zustand befindet.

Das Berechnungsglied 29 übermittelt an das Veränderungsglied 27 das Ergebnis einer Berechnung, nämlich ein Rechenergebnis 35, welches einerseits selbst eine Adaptionsgröße darstellen kann, andererseits aber auch - bei einer anderen Ausführungsform des Verfahrens - aus der Adaptionsgröße berechnet wird.

Es ergibt sich in Zusammenschau mit Figur 2 insbesondere Folgendes: Die Dosiereinrichtung 9 wird in der zweiten Betriebsart mittels des Emissionsregelungsmittels 23 auf der Grundlage der veränderten Bestimmungsgröße 28, die initial bevorzugt gleich der Bestimmungsgröße 26 ist, angesteuert. Es wird durch das Durchbrucherkennungsglied 31 eine Durchbrucherkennung für den SCR-Katalysator 7 durchgeführt, wobei dann, wenn ein Durchbruch erkannt wird, die Bestimmungsgröße mittels des Berechnungsglieds 29 und des Bestimmungsglieds 27 zu höherer Stickoxid-Konzentration stromabwärts des SCR-Katalysators 7 hin verändert wird, wobei dann die Dosiereinrichtung 9 zur Eindosierung des Reduktionsmittels auf der Grundlage der veränderten Bestimmungsgröße 28 angesteuert wird.

Der SCR-Katalysator 7 wird im Betrieb permanent durch das Durchbrucherkennungsglied 31 auf einen Durchbruch hin überwacht.

Es ist bevorzugt vorgesehen, dass die Bestimmungsgröße 26 und entsprechend die veränderte Bestimmungsgröße 28 eine Soll-Stickoxid-Konzentration stromabwärts des SCR-Katalysators sind, welche als Sollwert in das Emissionsregelungsmittel 23 eingehen.

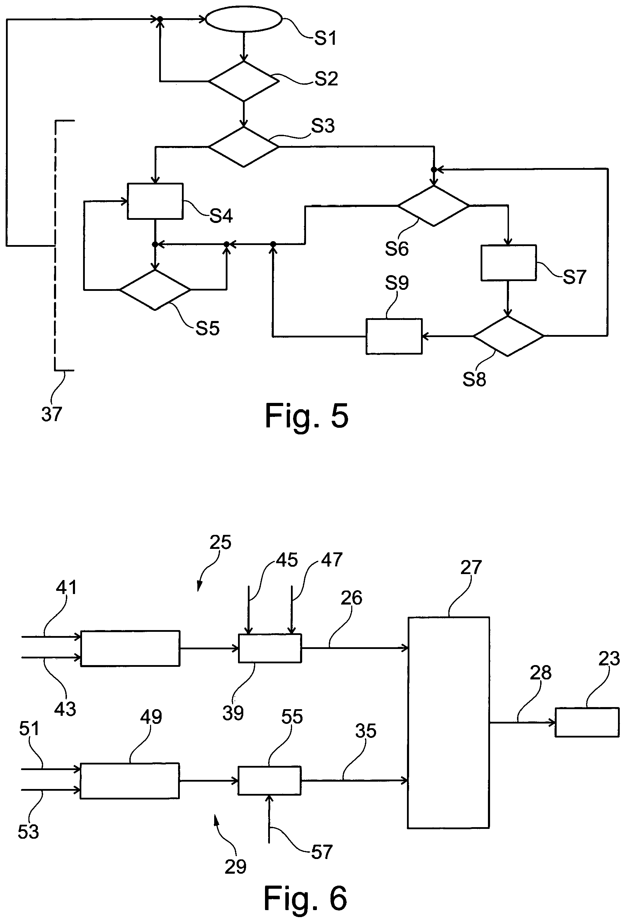

Bei einer Ausführungsform des Verfahrens ist vorgesehen, dass die Bestimmungsgröße 26 durch Neuberechnung auf der Grundlage einer Adaptionsgröße verändert wird, wobei bei dieser Ausführungsform des Verfahrens insbesondere das Rechenergebnis 35 eine in dem Berechnungsglied 29 neu berechnete Bestimmungsgröße darstellt, welche durch das Veränderungsglied 27 als veränderte Bestimmungsgröße 28 durchgelassen wird. Es ergibt sich dann Folgendes: Wird kein Durchbruch erkannt, und ist die Ist-Stickoxid-Konzentration stromabwärts des SCR-Katalysators gleich dem vorbestimmten Initialwert der Bestimmungsgröße 26 aus dem Kennfeld 25, wird die Adaptionsgröße in dem Berechnungsglied 29 gleich einem vorbestimmten Inertialwert gesetzt, was im Ergebnis dazu führt, dass als veränderte Bestimmungsgröße 28 der vorbestimmte Initialwert der Bestimmungsgröße 26 verwendet wird. In diesem Fall ist das Veränderungsglied 27 bevorzugt als Maximum-Bestimmungsglied ausgebildet, welches aus der Bestimmungsgröße 26 einerseits und dem Rechenergebnis 35 andererseits ein Maximum bildet, und den größeren Wert, also das Maximum, als veränderte Bestimmungsgröße 28 an das Emissionsregelungsmittel 23 weitergibt. Durch die Wahl des vorbestimmten Inertialwerts für die Adaptionsgröße in dem Berechnungsglied 29 wird - was später noch ausführlicher erläutert wird - das Rechenergebnis 35 dann so gewählt, dass dieses kleiner ist als die Bestimmungsgröße 26, sodass in diesem Fall diese durch das Bestimmungsglied 27 als veränderte Bestimmungsgröße 28 an das Emissionsregelungsmittel 23 weitergegeben wird. Die Berechnung sowie die Bedeutung des Rechenergebnisses 35 wird für diese Ausführungsform des Verfahrens näher in Zusammenhang mit Figur 6 erläutert, sodass hierauf verwiesen wird.

Bei einer anderen Ausführungsform des Verfahrens ist es möglich, dass eine Veränderung der Bestimmungsgröße in dem Veränderungsglied 27 durch rechnerische Verknüpfung des Initialwerts der Bestimmungsgröße 26 mit der Adaptionsgröße durchgeführt wird, wobei hier das Rechenergebnis 35 selbst die Adaptionsgröße darstellt. Das Veränderungsglied 27 ist dabei als Additions- oder Summierglied ausgebildet. Die Adaptionsgröße ist eine vorbestimmte Differenz-Stickoxid-Konzentration, welche durch das Berechnungsglied 29 berechnet wird. Diese wird in dem Veränderungsglied 27 auf den Initialwert der Bestimmungsgröße 26 addiert, und das Ergebnis dieser Addition wird als veränderte Bestimmungsgröße 28 an das Emissionsregelungsmittel 23 weitergegeben.

Auch bei dieser Ausführungsform des Verfahrens ist die Adaptionsgröße bevorzugt gleich einem vorbestimmten Inertialwert, wenn die durch den zweiten Stickoxid-Sensor 15 erfasste Ist-Stickoxidkonzentration stromabwärts des SCR-Katalysators 7 gleich der Bestimmungsgröße 26 ist. In diesem Fall ist der vorbestimmte Inertialwert der Adaptionsgröße bevorzugt Null, sodass dann auch das Rechenergebnis 35 Null ist, wobei dann die Bestimmungsgröße 26 in dem Veränderungsglied 27 - aufgrund der Addition von Null nicht verändert wird, wobei als veränderte Bestimmungsgröße 28 die ursprüngliche Bestimmungsgröße 26 an das Emissionsregelungsmittel 23 weitergegeben wird.

Im Folgenden wird näher erläutert, auf welche Weise in dem Berechnungsglied 29 das Rechenergebnis 35 berechnet wird.

**Fig. 5** zeigt eine schematische Darstellung einer Ausführungsform des Verfahrens zur Alterungserkennung in Form eines Flussdiagramms und insbesondere eine Berechnung des Rechenergebnisses 35 in dem Berechnungsglied 29. Das Verfahren startet in einem Initialisierungsschritt S1. Anschließend wird in einem zweiten Schritt S2 geprüft, ob stationäre Bedingungen an dem SCR-Katalysator 7 vorliegen. Hierzu wird insbesondere das Ergebnis des Stationärerkennungsglieds 33 ausgewertet. Liegt kein stationärer Zustand vor, springt das Verfahren zurück in den ersten Schritt S1 und startet neu. Liegen dagegen stationäre Bedingungen für den SCR-Katalysator 7 vor, schreitet das Verfahren fort zu einem dritten Schritt S3, in dem geprüft wird, ob ein Durchbruch des SCR-Katalysators 7 vorliegt. Dabei wird hier insbesondere geprüft, ob das Durchbrucherkennungsglied 31 einen Durchbruch meldet, oder nicht.

Liegt ein Durchbruch vor, schreitet das Verfahren fort zu einem vierten Schritt S4, in dem die Adaptionsgröße - vorzugsweise inkrementell - verändert wird. Wie die Adaptionsgröße verändert wird, hängt von der konkreten Ausführungsform des Verfahrens ab. Ist die Adaptionsgröße eine vorbestimmte Stickoxid-Umsatzrate des SCR-Katalysators 7, wird die Adaptionsgröße verringert, wenn ein Durchbruch erkannt wird. Ist die Adaptionsgröße dagegen eine vorbestimmte Differenz-Stickoxid-Konzentration, die insbesondere in dem Veränderungsglied 27 auf die Bestimmungsgröße 26 addiert wird, wird die Adaptionsgröße erhöht, wenn ein Durchbruch erkannt wird. In beiden Fällen führt letztlich die Veränderung der Adaptionsgröße in dem vierten Schritt S4 dazu, dass die veränderte Bestimmungsgröße 28 zu einer höheren Stickoxid-Konzentration stromabwärts des SCR-Katalysators hin verändert wird. Das Verfahren springt nun in einen fünften Schritt S5, in dem erneut geprüft wird, ob ein Durchbruch des SCR-Katalysators 7 vorliegt. Ist dies der Fall, springt das Verfahren zurück in den vierten Schritt S4, und die Adaptionsgröße wird erneut - vorzugsweise inkrementell, insbesondere mit konstanten Inkrementen - angepasst. Es folgt dann wieder in dem fünften Schritt S5 die Prüfung, ob weiterhin ein Durchbruch an dem SCR-Katalysator 7 vorliegt. Diese Schleife wird solange iteriert, bis kein Durchbruch an dem SCR-Katalysator 7 mehr erkannt wird. In diesem Fall vollzieht das Verfahren eine Schleife zurück in den fünften Schritt S5, sodass der SCR-Katalysator 7 permanent in Hinblick auf einen Durchbruch überwacht wird, wobei die Adaptionsgröße und damit letztlich auch die Bestimmungsgröße nicht verändert wird/werden. Aus dieser Schleife gelangt das Verfahren erst dann heraus, wenn eine für alle Schritte des Verfahrens ab dem dritten Schritt S3 gegebene, globale Ausstiegsbedingung 37 erfüllt ist, wobei die globale Ausstiegsbedingung 37 vorsieht, dass kein stationärer Zustand des SCR-Katalysators 7 mehr vorliegt. Wird insbesondere durch das Stationärerkennungsglied 33 erkannt, dass keine stationären Bedingungen mehr vorliegen, wird das Verfahren gemäß Figur 5 abgebrochen und springt zurück in den ersten Schritt S1, wo es neu startet.

Wird zwischenzeitlich in dem fünften Schritt S5 ein Durchbruch des SCR-Katalysators erkannt, erfolgt wieder ein Rücksprung in den vierten Schritt S4, wo die Adaptionsgröße erneut angepasst und somit auch die Bestimmungsgröße verändert wird.

Wird in dem dritten Schritt S3 kein Durchbruch erkannt, schreitet das Verfahren fort zu einem sechsten Schritt S6, in dem geprüft wird, ob die Adaptionsgröße aktuell ihren vorbestimmten Inertialwert oder bereits einen veränderten, von dem Inertialwert verschiedenen Wert aufweist. Weist die Adaptionsgröße ihren vorbestimmten Intertialwert auf, springt das Verfahren in den fünften Schritt S5, und es wird geprüft, ob ein Durchbruch an dem SCR-Katalysator 7 vorliegt. Ist dies der Fall, springt das Verfahren wiederum in den vierten Schritt S4; ist dies nicht der Fall, begibt sich das Verfahren in die permanente Überwachung des Durchbruchs, wobei der Schritt S5 dauerhaft wiederholt wird, nämlich solange, bis entweder ein Durchbruch des SCR-Katalysators 7 erkannt wird, oder bis keine stationären Bedingungen mehr für den SCR-Katalysator 7 vorliegen, also die globale Ausstiegsbedingung 37 erfüllt ist.

Wird in dem sechsten Schritt S6 dagegen festgestellt, dass die Adaptionsgröße verändert ist, also nicht mehr ihren vorbestimmten Inertialwert aufweist, schreitet das Verfahren fort zu einem siebten Schritt S7, in welchem die Adaptionsgröße entgegen der Veränderungsrichtung in dem vierten Schritt S4 verändert wird, und dies vorzugsweise inkrementell, insbesondere in konstanten Inkrementen. Wird also die Adaptionsgröße in dem vierten Schritt S4 erhöht, wird sie in dem siebten Schritt S7 erniedrigt. Wird sie in dem vierten Schritt S4 erniedrigt, wird sie in dem siebten Schritt S7 erhöht. Dies trägt dem Gedanken Rechnung, dass in dem Fall, in welchem die Adaptionsgröße bereits verändert ist, aber kein Durchbruch des SCR-Katalysators 7 in dem dritten Schritt S3 erkannt wird, die Veränderung der Adaptionsgröße in dem vierten Schritt S4 möglicherweise zu groß ausgefallen ist, sodass eine in Hinblick auf die Emissionen der Brennkraftmaschine 1 günstigere Regelung ohne Durchbruch des SCR-Katalysators 7 gegebenenfalls möglich wäre. Daher wird die Adaptionsgröße in dem siebten Schritt S7 versuchsweise inkrementell zurückgeändert, und es wird dann in einem achten Schritt S8 geprüft, ob mit der derart zurückveränderten Adaptionsgröße ein Durchbruch des SCR-Katalysators 7 vorliegt. Das Inkrement in dem siebten Schritt S7 ist bevorzugt genau gleich dem Inkrement in dem vierten Schritt S4 gewählt.

Wird in dem achten Schritt S8 festgestellt, dass kein Durchbruch des SCR-Katalysators vorliegt, bedeutet dies, dass eine stabile Regelung auch noch mit der um ein Inkrement zurückgesetzten Adaptionsgröße möglich ist. In diesem Fall springt das Verfahren zurück in den sechsten Schritt S6, und es wird erneut geprüft, ob die nun zurückgesetzte Adaptionsgröße wieder den vorbestimmten Inertialwert erreicht hat, oder ob sie noch ausgehend von dem vorbestimmten Inertialwert verändert ist. Es erfolgt dann entweder ein Fortschreiten zu dem fünften Schritt S5, wenn bereits der vorbestimmte Inertialwert wieder erreicht ist, oder die Adaptionsgröße wird in dem siebten Schritt S7 um ein weiteres Inkrement zurückgesetzt, wobei danach wieder in dem achten Schritt S8 geprüft wird, ob nun ein Durchbruch des SCR-Katalysators 7 vorliegt.

Liegt wiederum kein Durchbruch des SCR-Katalysators 7 vor, wird dieses Verfahren fortgesetzt, und zwar solange, bis entweder in dem sechsten Schritt S6 festgestellt wird, dass der vorbestimmte Inertialwert erreicht wurde, oder bis in dem achten Schritt S8 ein Durchbruch des SCR-Katalysators 7 erkannt wird.

Dies bedeutet, dass mit der derart zurückgesetzten Adaptionsgröße, die aus dem siebten Schritt S7 resultiert, keine stabile Emissionsregelung mehr möglich ist.

Daher wird nun in einem neunten Schritt S9 die letzte, in dem siebten Schritt S7 durchgeführte inkrementelle Änderung der Adaptionsgröße verworfen, und damit der Wert der Adaptionsgröße, den diese vor der letzten Veränderung in dem siebten Schritt S7 aufwies, wieder hergestellt. Das Verfahren springt dann weiter in den fünften Schritt S5, in dem wiederum geprüft wird, ob ein Durchbruch des SCR-Katalysators 7 vorliegt.

Wie bereits angedeutet, werden alle Schritte S3, S4, S5, S6, S7, S8, S9 verlassen, wenn die globale Ausstiegsbedingung 37 erfüllt ist, also keine stationären Bedingungen mehr für den SCR-Katalysator vorliegen. Das Verfahren wird demnach in diesem Fall abgebrochen und springt zurück in den ersten Schritt S1, von dem ausgehend es erneut durchgeführt wird.

Dabei bleibt aber der letzte Wert der Adaptionsgröße, welcher in dem vierten Schritt S4 oder in dem siebten Schritt S7 ermittelt wurde, bevorzugt erhalten, sodass er bei einem nächsten Durchlauf des Verfahrens wieder zur Verfügung steht.

Insbesondere ist vorgesehen, dass Daten zur Bestimmung der Adaptionsgröße während eines ersten Adaptionszeitraums, insbesondere eines ersten Durchlaufs des Verfahrens ausgehend von dem ersten Schritt S1, in einem überschreibbaren Kennfeld, nämlich einem Lernkennfeld, hinterlegt werden, wobei sie in einem zweiten Adaptionszeitraum, insbesondere nämlich in einem zweiten Durchlauf des Verfahrens ausgehend von dem ersten Schritt S1, bereitgestellt werden, wobei der zweite Adaptionszeitraum dem ersten Adaptionszeitraum zeitlich nachgelagert ist. Wird das Verfahren also insbesondere aufgrund einer Instationarität an dem SCR-Katalysator 7 oder im Betrieb der Brennkraftmaschine 1 abgebrochen, steht dann bei einem nächsten Verfahrensdurchlauf wieder der zuletzt erreichte Wert der Adaptionsgröße zur Verfügung.

Es ist aber bevorzugt vorgesehen, dass das überschreibbare Kennfeld, insbesondere das Lernkennfeld, in vorbestimmten Betriebszuständen des Abgasnachbehandlungssystems 3 oder damit wirkverbundener Einrichtungen, insbesondere der Brennkraftmaschine 1, nicht mit Daten beschrieben wird. Hierbei handelt es sich insbesondere um Betriebszustände, in denen aufgrund ihrer Irregularität oder aufgrund von in diesen Betriebszuständen auftretenden Fehlern, eine Fehladaption der Emissionsregelung stattfinden würde, wenn die in diesen Zuständen erreichten, angepassten Adaptionsgrößen in dem Lernkennfeld hinterlegt würden.

Es ist auch möglich, dass in bestimmten Betriebszuständen des Abgasnachbehandlungssystems 3 oder damit wirkverbundener Einrichtungen, insbesondere der Brennkraftmaschine 1, keine Veränderung der Adaptionsgröße stattfindet, wenn dies aufgrund der spezifischen Natur solcher Betriebszustände nicht sinnvoll erscheint.

Es ist bevorzugt vorgesehen, dass bei Erreichen oder Überschreiten eines Grenzwerts der Adaptionsgröße, insbesondere in dem vierten Schritt S4 und/oder in dem siebten Schritt S7, oder bei Erreichen oder Überschreiten eines Grenzwerts der Ist-Stickoxid-Konzentration stromabwärts des SCR-Katalysators 7, ein Warnsignal erzeugt wird. Dieses kann beispielsweise einem Betreiber des Abgasnachbehandlungssystems 3 und/oder der Brennkraftmaschine 1 anzeigen, dass der SCR-Katalysator 7 getauscht werden muss. Alternativ oder zusätzlich ist in einem solchen Fall bevorzugt vorgesehen, dass eine Verringerung der Stickoxid-Konzentration stromaufwärts des SCR-Katalysators 7 initiiert wird. Hierzu wird bevorzugt der Motorblock 5 der Brennkraftmaschine 1 mit veränderten Parametern angesteuert, um eine Absenkung der Stickoxidrohemissionen zu bewirken. Es kann in diesem Fall möglich sein, auch den gealterten SCR-Katalysator 7 noch weiter zu verwenden, bevor er endgültig getauscht werden muss.

**Fig. 6** zeigt eine schematische Darstellung einer Ausführungsform des Verfahrens zur Alterungserkennung, wobei bei dieser Ausführungsform die Adaptionsgröße eine vorbestimmte Stickoxid-Umsatzrate des SCR-Katalysators ist, wobei in Figur 6 die Funktionsweise des Berechnungsglieds 29 sowie des Veränderungsglieds 27 für diese Ausführungsform genauer erläutert werden.

Das Kennfeld 25 ist hier zusätzlich verbunden mit einem ersten Umrechnungsglied 39. In das Kennfeld 25 gehen - wie bereits beschrieben - eine momentane Drehzahl 41 sowie ein momentanes Drehmoment 43 der Brennkraftmaschine 1 ein. In dem Kennfeld 25 sind vorzugsweise Sollwerte für die Stickoxid-Emissionen der Brennkraftmaschine 1 in Masse pro Leistung, insbesondere in Gramm pro Kilowattstunde (g/kWh) hinterlegt, welche in dem ersten Umrechnungsglied 39 in Abhängigkeit von einer momentanen Abgasmasse 45, die vorzugsweise anhand eines Modells in der Steuereinrichtung 21 der Brennkraftmaschine 1 berechnet wird, und abhängig von einer momentanen Leistung 47 der Brennkraftmaschine, die bevorzugt ebenfalls in der Steuereinrichtung 21 der Brennkraftmaschine 1 berechnet wird, in eine Stickoxid-Konzentration im Abgas, vorzugsweise in ppm, umgerechnet werden. Diese Soll-Stickoxid-Konzentration, die aus dem ersten Umrechnungsglied 39 resultiert, ist vorzugsweise die Bestimmungsgröße 26, die an das Veränderungsglied 27 übergeben wird.

In dem Berechnungsglied 29 ist vorzugsweise ein Lernkennfeld 49 hinterlegt, in welchem eine vorbestimmte Stickoxid-Umsatzrate des SCR-Katalysators 7 als Adaptionsgröße hinterlegt ist. Es ist möglich, dass das Lernkennfeld 49 zunächst mit einer vorbestimmten Stickoxid-Umsatzrate von 100 % oder 1 initialisiert ist. Alternativ oder zusätzlich ist es auch möglich, dass - insbesondere in Prüfstandsversuchen - eine maximale Umsatzrate des SCR-Katalysators einerseits aus den Rohemissionen der Brennkraftmaschine 1 und andererseits aus den Sollwerten der Bestimmungsgröße 26 berechnet wird, wobei das Lernkennfeld 49 dann mit diesen Werten initialisiert wird.

Die Werte für die Adaptionsgröße sind in dem Lernkennfeld 49 insbesondere in Abhängigkeit von einer Temperatur 51 des SCR-Katalysators 7 sowie in Abhängigkeit von einem momentanen Abgasmassenstrom 53 hinterlegt, wobei der momentane Abgasmassenstrom 53 vorzugsweise in der Steuereinrichtung 21 der Brennkraftmaschine 1 bestimmt wird.

Das Berechnungsglied 29 weist außerdem ein zweites Umrechnungsglied 55 auf, in welchem die aus dem Lernkennfeld 49 betriebspunktabhängig ausgelesene Umsatzrate abhängig von den mittels des zweiten Stickoxidsensors 19 gemessenen oder in der Steuereinrichtung 21 der Brennkraftmaschine 1 berechneten Rohemissionen 57 umgerechnet wird in eine Soll-Stickoxidkonzentration, vorzugsweise in ppm, die als Rechenergebnis 35 an das Veränderungsglied 27 übergeben wird.

Das Veränderungsglied 27 ist in diesem Fall ein Maximierungsglied, welches aus der Bestimmungsgröße 26 einerseits und dem Rechenergebnis 35 andererseits ein Maximum bildet, und insoweit den größeren der beiden Werte als veränderte Bestimmungsgröße 28 an das Emissionsregelungsmittel 23 übergibt.

Die in dem Lernkennfeld 49 hinterlegten Werte der Adaptionsgröße oder die entsprechenden Daten werden insbesondere dann verändert, wenn ein Durchbruch des SCR-Katalysators 7 vorliegt, oder wenn sie bereits verändert wurden und kein Durchbruch des SCR-Katalysators 7 mehr vorliegt. Insbesondere werden die Werte in dem Lernkennfeld 49 im Rahmen des in Zusammenhang mit Figur 5 erläuterten Verfahrens verändert, insbesondere dort in dem vierten Schritt S4 oder in dem siebten Schritt S7.

Ist die Adaptionsgröße bei dieser Ausführungsform des Verfahrens gleich dem vorbestimmten Inertialwert, der beispielsweise 100 % oder 1 betragen kann, führt dies dazu, dass in jedem Fall das Rechnerergebnis 35 kleiner ist als die Bestimmungsgröße 26, sodass diese durch das Veränderungsglied 27 als veränderte Bestimmungsgröße 28 an das Emissionsregelungsmittel 23 weitergegeben wird.

Insgesamt zeigt sich, dass mittels des Verfahrens, der Steuereinrichtung 21, des Abgasnachbehandlungssystem 3 und der Brennkraftmaschine 1 eine Alterungsreserve eines neuwertigen SCR-Katalysators 7 vorteilhaft ausgenutzt werden kann, um die Brennkraftmaschine 1 zu Beginn ihrer Betriebsdauer oder einer Lebenszeit des SCR-Katalysators 7 verbrauchsarm abzustimmen. Somit ist es nicht mehr notwendig, die Brennkraftmaschine 1 von Beginn an ungünstig zu betreiben, nur weil zum Ende der Lebenszeit des SCR-Katalysators 7 Umsatzraten desselben nachlassen.

## Patentansprüche

1. Verfahren zum Betreiben eines Systems mit einer Brennkraftmaschine (1) und einem Abgasnachbehandlungssystem (3) mit einem SCR-Katalysator (7), wobei
- die Brennkraftmaschine (1) auf der Grundlage von mindestens einem eine Stickoxid-Rohemission (57) beeinflussenden Prozessparameter angesteuert wird, wobei
- eine Alterungserkennung für den SCR-Katalysator (7) durchgeführt wird, wobei
- in einer ersten Betriebsart der Brennkraftmaschine (1), wenn eine Alterung des SCR-Katalysators (7) erkannt wird, der mindestens eine Prozessparameter in Richtung einer verringerten Stickoxid-Rohemission (57) verändert wird, wobei
- die Brennkraftmaschine (1) auf der Grundlage des veränderten mindestens einen Prozessparameters angesteuert wird, wobei
- wenn eine Alterung erkannt wird, der mindestens eine Prozessparameter in Richtung einer Verringerung der Stickoxid-Rohemission (57) verändert wird, wenn die Stickoxid-Rohemission (57) größer ist als eine vorbestimmte Stickoxid-Minimalrohemission, wobei
- die Veränderung des Prozessparameters beendet wird, wenn
a) die Stickoxid-Rohemission (57) größer ist als die vorbestimmte Stickoxid-Minimalrohemission und keine Alterung mehr erkannt wird, oder wenn
b) die Stickoxid-Rohemission (57) das Niveau der Stickoxid-Minimalrohemission erreicht oder unterschreitet.

2. Verfahren nach Anspruch 1, **dadurch gekennzeichnet, dass** der SCR-Katalysator (7) im Betrieb permanent auf eine Alterung überwacht wird.

3. Verfahren nach Anspruch 1 oder 2, **dadurch gekennzeichnet, dass** der mindestens eine Prozessparameter in einem initialen Betriebszustand in Richtung eines kraftstoffverbrauchsoptimalen Betriebs der Brennkraftmaschine (1) eingestellt wird.

4. Verfahren nach einem der vorhergehenden Ansprüche, **dadurch gekennzeichnet, dass** der mindestens eine Prozessparameter konstant gehalten wird, wenn eine Alterung erkannt wird, und wenn zugleich die Stickoxid-Rohemission (57) das Niveau der vorbestimmten Stickoxid-Minimalrohemission erreicht oder unterschreitet.

5. Verfahren nach einem der vorhergehenden Ansprüche, **dadurch gekennzeichnet, dass** die Brennkraftmaschine (1) in eine zweite Betriebsart geschaltet wird, wenn die Stickoxid-Rohemission (57) das Niveau der vorbestimmten Stickoxid-Minimalrohemission erreicht oder unterschreitet, wobei eine Emissionsregelung in der zweiten Betriebsart auf der Grundlage einer durch die Alterungserkennung veränderten Bestimmungsgröße für eine Stickoxid-Konzentration stromabwärts des SCR-Katalysators (7) durchgeführt wird.

6. Steuereinrichtung (21) für ein System mit einer Brennkraftmaschine (1) und einem Abgasnachbehandlungssystem (3) mit einem SCR-Katalysator (7), wobei
- die Steuereinrichtung (21) eingerichtet ist zur Ansteuerung der Brennkraftmaschine (1) auf der Grundlage mindestens eines eine Stickoxid-Rohemission (57) beeinflussenden Prozessparameters, wobei
- die Steuereinrichtung (21) eingerichtet ist zur Durchführung einer Alterungserkennung für den SCR-Katalysator (7), und in einer ersten Betriebsart der Brennkraftmaschine (1), wenn eine Alterung erkannt wird, zur Veränderung des mindestens einen Prozessparameters in Richtung einer verringerten Stickoxid-Rohemission (57), wobei
- die Steuereinrichtung (21) eingerichtet ist zur Ansteuerung der Brennkraftmaschine (1) auf der Grundlage des mindestens einen veränderten Prozessparameters, wobei
- die Steuereinrichtung (21) eingerichtet ist, um den mindestens einen Prozessparameter, wenn eine Alterung erkannt wird, in Richtung einer Verringerung der Stickoxid-Rohemission (57) zu verändern, wenn die Stickoxid-Rohemission (57) größer ist als eine vorbestimmte Stickoxid-Minimalrohemission, und um
- die Veränderung des Prozessparameters zu beenden, wenn
a) die Stickoxid-Rohemission (57) größer ist als die vorbestimmte Stickoxid-Minimalrohemission und keine Alterung mehr erkannt wird, oder wenn
b) die Stickoxid-Rohemission (57) das Niveau der Stickoxid-Minimalrohemission erreicht oder unterschreitet, wobei
- die Steuereinrichtung (21) insbesondere eingerichtet ist zur Durchführung eines Verfahrens nach einem der Ansprüche 1 bis 5.

7. Abgasnachbehandlungssystem (3), **gekennzeichnet durch** einen SCR-Katalysator (7) und eine Steuereinrichtung (21) nach Anspruch 6.

8. Brennkraftmaschine (1), **gekennzeichnet durch** eine Steuereinrichtung (21) nach Anspruch 6 und/oder ein Abgasnachbehandlungssystem (3) nach Anspruch 7.

## Claims

1. Process for operating a system comprising an internal combustion engine (1) and an exhaust gas aftertreatment system (3) comprising an SCR catalyst (7), wherein
- the internal combustion engine (1) is controlled based on at least one process parameter influencing an untreated nitrogen oxide emission (57), wherein
- an aging detection for the SCR catalyst (7) is performed, wherein
- in a first operating mode of the internal combustion engine (1) when an aging of the SCR catalyst (7) is detected the at least one process parameter is altered in the direction of a reduced untreated nitrogen oxide emission (57), wherein
- the internal combustion engine (1) is controlled based on the altered at least one process parameter, wherein
- when an aging is detected the at least one process parameter is altered in the direction of a reduction in the untreated nitrogen oxide emission (57) when the untreated nitrogen oxide emission (57) is greater than a predetermined minimum untreated nitrogen oxide emission, wherein
- the altering of the process parameter is terminated when
a) the untreated nitrogen oxide emission (57) is greater than the predetermined minimum untreated nitrogen oxide emission and aging is no longer detected or when
b) the untreated nitrogen oxide emission (57) achieves or falls below the level of the minimum untreated nitrogen oxide emission.

2. Process according to Claim 1, **characterized in that** the SCR catalyst (7) is permanently monitored for aging during operation.

3. Process according to Claim 1 or 2, **characterized in that** in an initial operating mode the at least one process parameter is adjusted in the direction of a fuel consumption-optimal operation of the internal combustion engine (1).

4. Process according to any of the preceding claims, **characterized in that** the at least one process parameter is kept constant when an aging is detected and when simultaneously the untreated nitrogen oxide emission (57) achieves or falls below the level of the predetermined minimum untreated nitrogen oxide emission.

5. Process according to any of the preceding claims, **characterized in that** the internal combustion engine (1) is switched to a second operating mode when the untreated nitrogen oxide emission (57) achieves or falls below the level of the predetermined minimum untreated nitrogen oxide emission, wherein an emission controlling in the second operating mode is performed based on a determining parameter for a nitrogen oxide concentration downstream of the SCR catalyst (7) which is altered by the aging detection.

6. Control means (21) for a system comprising an internal combustion engine (1) and an exhaust gas aftertreatment system (3) comprising an SCR catalyst (7), wherein
- the control means (21) is adapted for controlling the internal combustion engine (1) based on at least one process parameter influencing an untreated nitrogen oxide emission (57), wherein
- the control means (21) is adapted for performing an aging detection for the SCR catalyst (7) and in a first operating mode of the internal combustion engine (1) when an aging is detected for altering the at least one process parameter in the direction of a reduced untreated nitrogen oxide emission (57), wherein
- the control means (21) is adapted for controlling the internal combustion engine (1) based on the at least one altered process parameter, wherein
- the control means (21) is adapted for altering when an aging is detected the at least one process parameter in the direction of a reduction in the untreated nitrogen oxide emission (57) when the untreated nitrogen oxide emission (57) is greater than a predetermined minimum untreated nitrogen oxide emission and for
- terminating the altering of the process parameter when
a) the untreated nitrogen oxide emission (57) is greater than the predetermined minimum untreated nitrogen oxide emission and aging is no longer detected or when
b) the untreated nitrogen oxide emission (57) achieves or falls below the level of the minimum untreated nitrogen oxide emission, wherein
- the control means (21) is in particular adapted for performing a process according to any of Claims 1 to 5.

7. Exhaust gas aftertreatment system (3), **characterized by** an SCR catalyst (7) and a control means (21) according to Claim 6.

8. Internal combustion engine (1), **characterized by** a control means (21) according to Claim 6 and/or an exhaust gas aftertreatment system (3) according to Claim 7.

## Revendications

1. Procédé de fonctionnement d'un système comprenant un moteur à combustion interne (1) et un système de post-traitement de gaz d'échappement (3) pourvu d'un catalyseur RCS (7),
- le moteur à combustion interne (1) étant commandé sur la base d'au moins un paramètre de processus influant sur une émission brute d'oxydes d'azote (57),
- une détection du vieillissement du catalyseur RCS (7) étant effectuée,
- dans un premier mode de fonctionnement du moteur à combustion interne (1), lorsqu'un vieillissement du catalyseur RCS (7) est détecté, l'au moins un paramètre de processus étant modifié dans le sens d'une émission brute d'oxydes d'azote (57) réduite,
- le moteur à combustion interne (1) étant commandé sur la base de l'au moins un paramètre de processus modifié,
- lorsqu'un vieillissement est détecté, l'au moins un paramètre de processus étant modifié dans le sens d'une réduction de l'émission brute d'oxydes d'azote (57), lorsque l'émission brute d'oxydes d'azote (57) est supérieure à une émission brute d'oxydes d'azote minimale prédéterminée,
- la variation du paramètre de processus étant terminée lorsque
a) l'émission brute d'oxydes d'azote (57) est supérieure à l'émission brute d'oxydes d'azote minimale prédéterminée et aucun vieillissement n'est détecté, ou lorsque
b) l'émission brute d'oxydes d'azote (57) atteint le niveau de l'émission brute d'oxydes d'azote minimale ou tombe au-dessous de celui-ci.

2. Procédé selon la revendication 1, **caractérisé en ce que** le catalyseur RCS (7) est surveillé en permanence pendant le fonctionnement pour détecter un vieillissement.

3. Procédé selon la revendication 1 ou 2, **caractérisé en ce que** l'au moins un paramètre de processus est défini dans un état de fonctionnement initial dans le sens du fonctionnement à consommation de carburant optimale du moteur à combustion interne (1).

4. Procédé selon l'une des revendications précédentes, **caractérisé en ce que** l'au moins un paramètre de processus est maintenu constant lorsqu'un vieillissement est détecté et lorsqu'en même temps l'émission brute d'oxydes d'azote (57) atteint le niveau de l'émission brute d'oxydes d'azote minimale prédéterminée ou tombe au-dessous de celui-ci.

5. Procédé selon l'une des revendications précédentes, **caractérisé en ce que** le moteur à combustion interne (1) est commuté sur un deuxième mode de fonctionnement lorsque l'émission brute d'oxydes d'azote (57) atteint le niveau de l'émission brute d'oxydes d'azote minimale prédéterminée ou tombe au-dessous de celui-ci, une régulation de l'émission est effectué dans le deuxième mode de fonctionnement en aval du catalyseur RCS (7) sur la base d'une grandeur de détermination, modifiée par la détection de vieillissement, d'une concentration en oxydes d'azote.

6. Dispositif de commande (21) destiné à un système comprenant un moteur à combustion interne (1) et un système de post-traitement de gaz d'échappement (3) pourvu d'un catalyseur RCS (7),
- le dispositif de commande (21) étant adapté pour commander le moteur à combustion interne (1) sur la base d'au moins un paramètre de processus influant sur l'émission brute d'oxydes d'azote (57),
- le dispositif de commande (21) étant adapté pour effectuer une détection de vieillissement du catalyseur RCS (7), et dans un premier mode de fonctionnement du moteur à combustion interne (1), lorsqu'un vieillissement est détecté, pour modifier l'au moins un paramètre de processus dans le sens d'une émission brute d'oxydes d'azote (57) réduite,
- le dispositif de commande (21) étant adapté pour commander le moteur à combustion interne (1) sur la base d'au moins un paramètre de processus modifié,
- le dispositif de commande (21) adapté pour modifier l'au moins un paramètre de processus lorsqu'un processus de vieillissement est détecté dans le sens d'une réduction de l'émission brute d'oxydes d'azote (57) lorsque l'émission brute d'oxydes d'azote (57) est supérieure à une émission brute d'oxydes d'azote minimale prédéterminée et pour
- mettre fin à la variation du paramètre de processus, lorsque
a) l'émission brute d'oxydes d'azote (57) est supérieure à l'émission brute d'oxydes d'azote minimale prédéterminée et aucun vieillissement n'est détecté, ou lorsque
b) l'émission brute d'oxydes d'azote (57) atteint le niveau de l'émission brute d'oxydes d'azote minimale ou tombe au-dessous de celui-ci,
- le dispositif de commande (21) étant notamment adapté pour mettre en oeuvre le procédé selon l'une des revendications 1 à 5.

7. Système de post-traitement de gaz d'échappement (3), **caractérisé par** un catalyseur RCS (7) et un dispositif de commande (21) selon la revendication 6.

8. Moteur à combustion interne (1), **caractérisé par** un dispositif de commande (21) selon la revendication 6 et/ou un système de post-traitement de gaz d'échappement (3) selon la revendication 7.
